# EUROPÄISCHE PATENTSCHRIFT

(11) **EP 3 753 709 B1**
(45) Veröffentlichungstag und Bekanntmachung des Hinweises auf die Patenterteilung: **06.10.2021**
(21) Anmeldenummer: 19181266.8
(22) Anmeldetag: 19.06.2019
(51) Int. Cl.: B29C 64/329, B29C 64/35, B33Y 40/00, B22F 10/20

(54) **BESCHICHTER FÜR EINEN 3D-DRUCKER, 3D-DRUCKER MIT DEM BESCHICHTER, VERWENDUNG DES BESCHICHTERS UND VERWENDUNG DES 3D-DRUCKERS**
COATER FOR A 3D PRINTER, 3D PRINTER WITH THE COATER, USE OF THE COATER AND USE OF 3D PRINTER
DISPOSITIF DE COUCHEUSE POUR UNE IMPRIMANTE 3D, IMPRIMANTE 3D DOTÉ D'UN DISPOSITIF DE COUCHEUSE, UTILISATION DE LE UTILISATION DE DISPOSITIF DE COUCHEUSE ET L'IMPRIMANTE 3D

(43) Veröffentlichungstag der Anmeldung: 23.12.2020
(73) Patentinhaber: ExOne GmbH, 86368 Gersthofen (DE)
(72) Erfinder: HUBER, Thomas, 86551 Aichach (DE); HULEIHIL, Hadi, 86157 Augsburg (DE); MÜLLER, Alexander, 86420 Diedorf (DE); LADEWIG, Roland, 24340 Windeby (DE)
(74) Vertreter: Viering, Jentschura & Partner mbB Patent- und Rechtsanwälte

(56) Entgegenhaltungen:
- EP-A1- 0 739 704
- EP-A2- 0 945 202
- WO-A1-03/086726
- DE-A1-102015 003 372
- DE-A1-102015 103 726
- DE-A1-102017 120 205
- US-A1- 2017 182 713

## Beschreibung

Die vorliegende Erfindung betrifft einen Beschichter für einen 3D-Drucker, einen 3D-Drucker mit dem Beschichter, eine Verwendung des Beschichters und eine Verwendung des 3D-Druckers.

Es sind verschiedene 3D-Druck-Verfahren (und folglich verschiedene Arten von 3D-Druckern, also Maschinen/Anlagen zum schichtweisen Aufbau eines Bauteils) bekannt.

Einige 3D-Druck-Verfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend einem/dem zu fertigenden Bauteil) selektiv verfestigt, zum Beispiel durch selektives Aufdrucken von (zum Beispiel flüssigem) Behandlungsmittel, zum Beispiel Bindemittel, zum Beispiel Binder.
(3) Die Schritte (1) und (2) werden wiederholt, um ein/das gewünschte/s Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel ein/der Beschichter und eine/die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden.

Ein/der Bauraum, in dem das oder die Bauteile gefertigt werden, kann zum Beispiel von einer sogenannten Baubox (auch Jobbox genannt, zum Beispiel ausgebildet als sog. Wechselbehälter) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Das Bauteil kann aber zum Beispiel auch frei auf einer Bauplattform aufgebaut werden, in welchem Fall sich der Bauraum aus dem Schichtenverbund auf der Bauplattform ergibt und das Baufeld von einer obersten, zuletzt aufgetragenen Schicht definiert wird. Dabei ist es zum Beispiel möglich, einen den Bauraum umfangsseitig umgebenden Rahmen mitzudrucken.

Ein schichtweises Aufbauen von ein oder mehreren dreidimensionalen Bauteilen in einem/dem Bauraum kann zum Beispiel durch selektives Verfestigen von mehreren aneinander angrenzenden Partikelmaterial-Schichten in einem jeweiligen Teilbereich davon erfolgen, zum Beispiel durch Binder-Jetting, d.h. durch (selektives) Verkleben des Partikelmaterials mit einem (zum Beispiel flüssigen) Behandlungsmittel, zum Beispiel Bindemittel, zum Beispiel Binder.

In dem obigen Schritt (1) kommt in der Regel ein Beschichter (auch Recoater genannt) zum Einsatz. Es sind unterschiedliche Beschichter zur Verwendung in einem 3D-Drucker bekannt, mit denen ein Partikelmaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (sog. Walzen-Beschichter), vor der zunächst eine Menge an Partikelmaterial abgelegt wird und die anschließend horizontal über das Baufeld hinweg verfahren wird, um das Partikelmaterial in Form einer gleichmäßigen Schicht auf das Baufeld aufzubringen. Die Walze kann dabei in Gegenlaufrichtung rotiert werden.

Eine andere Art von Beschichter (sog. Behälter-Beschichter, zum Beispiel Schlitz-Beschichter) verwendet einen Behälter, der einen inneren Hohlraum zur Aufnahme von Partikelmaterial definiert, und hat einen (zum Beispiel langgestreckten bzw. länglichen) Ausgabespalt (bzw. Ausgabeschlitz) zum Ausgeben des Partikelmaterials. Der Behälter-Beschichter kann zum Beispiel über ein/das Baufeld hinweg verfahrbar sein (zum Beispiel horizontal, zum Beispiel quer zu seiner Längsrichtung), wobei das Partikelmaterial durch den (zum Beispiel langgestreckten bzw. länglichen) Ausgabespalt auf das Baufeld ausgebbar ist, um dadurch eine gleichmäßige, vollflächige/durchgängige Partikelmaterialschicht auf das Baufeld bzw. die Bauplattform aufzubringen. Der Beschichter kann zum Beispiel langgestreckt bzw. länglich sein, um die Länge oder Breite eines rechteckigen Baufelds zu überspannen bzw. abzudecken.

In dem obigen Schritt (2) kann zum Beispiel eine Druckvorrichtung mit einem Druckkopf zum Einsatz kommen, der auf einen Teilbereich einer/der zuvor aufgebrachten Partikelmaterial-Schicht gesteuert ein (zum Beispiel flüssiges) Behandlungsmittel aufbringt (sog. Binder-Jetting). Das Behandlungsmittel trägt zu einer (unmittelbaren und/oder späteren) Verfestigung der Partikelmaterial-Schicht in dem Teilbereich bei. Zum Beispiel kann das Behandlungsmittel ein Bindemittel, zum Beispiel Binder, sein/enthalten, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Partikelmaterial-Schicht zu verfestigen, insbesondere durch Sintern oder Schmelzen des Partikelmaterials in dem Teilbereich.

Die vorliegende Erfindung betrifft einen Beschichter der zweitgenannten Art, d.h. einen Behälter-Beschichter, zum Beispiel Schlitz-Beschichter. Beispiele für Behälter-Beschichter sind zum Beispiel aus DE 10 2009 056 689 A1, DE 10 2014 112 469 A1 und DE 10 2017 120 205 A1 bekannt. Weitere Beispiele für Behälter-Beschichter sind zum Beispiel aus EP 0 945 202 A2 und WO 03/086726 A1 bekannt. DE 10 2015 003 372 A1 offenbart einen Beschichter gemäß dem Oberbegriff von Anspruch 1.

Es kann als eine Aufgabe der vorliegenden Erfindung angesehen werden, einen verbesserten Beschichter für einen 3D-Drucker anzugeben.

Alternativ oder zusätzlich kann es als eine Aufgabe der vorliegenden Erfindung angesehen werden, einen alternativen Beschichter für einen 3D-Drucker anzugeben.

Alternativ oder zusätzlich kann es als eine Aufgabe der vorliegenden Erfindung angesehen werden, einen Beschichter für einen 3D-Drucker anzugeben, der eine verbesserte Reproduzierbarkeit des 3D-Druck-Prozesses ermöglicht.

Alternativ oder zusätzlich kann es als eine Aufgabe der vorliegenden Erfindung angesehen werden, einen Beschichter für einen 3D-Drucker anzugeben, der eine verbesserte Handhabbarkeit hat.

Alternativ oder zusätzlich kann es als eine Aufgabe der vorliegenden Erfindung angesehen werden, einen Beschichter für einen 3D-Drucker anzugeben, der ein effektives und/oder effizientes Auftragen von Partikelmaterial auf ein Baufeld ermöglicht, zum Beispiel auch bei wechselnden Rezepturen (unter Berücksichtigung von zum Beispiel einem oder mehreren von dem Partikelmaterial, ggf. in dem Partikelmaterial enthaltene Zuschlagstoffe, ggf. in dem Partikelmaterial enthaltene Bindemittelkomponente, aufzudruckende Bindemittelkomponente etc.).

Alternativ oder zusätzlich kann es als eine Aufgabe der vorliegenden Erfindung angesehen werden, einen Beschichter für einen 3D-Drucker anzugeben, mit dem Partikelmaterial zuverlässig auf ein Baufeld aufbringbar ist, zum Beispiel auch bei wechselnden Rezepturen (unter Berücksichtigung von zum Beispiel einem oder mehreren von dem Partikelmaterial, ggf. in dem Partikelmaterial enthaltene Zuschlagstoffe, ggf. in dem Partikelmaterial enthaltene Bindemittelkomponente, aufzudruckende Bindemittelkomponente etc.).

Hierzu stellt die vorliegende Erfindung einen Beschichter für einen 3D-Drucker gemäß Anspruch 1, einen 3D-Drucker gemäß Anspruch 12, eine Verwendung des Beschichters gemäß Anspruch 13 und eine Verwendung des 3D-Druckers gemäß Anspruch 14 bereit. Weitere erfindungsgemäße Ausgestaltungen sind Gegenstand der abhängigen Ansprüche.

Gemäß einem Aspekt der Erfindung hat ein Beschichter (zum Beispiel Behälter-Beschichter, zum Beispiel Schlitz-Beschichter) für einen 3D-Drucker einen langgestreckten (bzw. länglichen) Behälter, der zwei gegenüberliegende, lange Seitenwände aufweist, zwischen denen ein innerer Hohlraum zur Aufnahme von Partikelmaterial gebildet ist, der in einem länglichen (bzw. langgestreckten) Ausgabespalt (zum Beispiel Ausgabeschlitz) zum Ausgeben des Partikelmaterials aus dem Behälter auf ein Baufeld mündet, und eine erste Einstellvorrichtung, die dazu eingerichtet ist, um die beiden langen Seitenwände zumindest in einem jeweiligen an den Ausgabespalt angrenzenden unteren Abschnitt davon relativ zueinander zu bewegen, um dadurch die Breite des Ausgabespalts variabel einzustellen (zum Beispiel so dass eine von dem Beschichter (auf das Baufeld) ausgegebene Menge von Partikelmaterial variabel einstellbar ist). Der Beschichter kann zum Beispiel über ein/das Baufeld hinweg verfahrbar sein (zum Beispiel horizontal, zum Beispiel quer zu seiner Längsrichtung), wobei das Partikelmaterial durch den Ausgabespalt auf das Baufeld ausgebbar ist, um dadurch eine gleichmäßige, vollflächige/durchgängige Partikelmaterialschicht auf das Baufeld bzw. eine Bauplattform aufzubringen. Der Beschichter kann zum Beispiel langgestreckt bzw. länglich sein, um die Länge oder Breite eines rechteckigen Baufelds zu überspannen bzw. abzudecken. Die erste Einstellvorrichtung kann zum Beispiel eingerichtet sein und/oder ermöglichen, die Spaltbreite gesteuert und/oder automatisiert einzustellen. Die erste Einstellvorrichtung kann zum Beispiel ein oder mehrere (zum Beispiel Elektro-) Motoren aufweisen, welche wiederum zum Beispiel mit einer Steuervorrichtung in Verbindung stehen können bzw. von dieser angesteuert werden können.

Durch eine Bewegung der beiden langen Seitenwände zumindest in einem jeweiligen an den Ausgabespalt angrenzenden unteren Abschnitt davon relativ zueinander kann zum Beispiel auf einfache Art die Breite des Ausgabespalts variabel eingestellt werden. Insbesondere kann zum Beispiel eine separate Vorrichtung zum Einstellen der Breite des Ausgabespalts entfallen, zum Beispiel eine separate Anordnung von zwei horizontal/linear aufeinander zu und voneinander weg bewegbaren Schiebern. Dadurch kann zum Beispiel ein Aufbau des Beschichters vereinfacht werden. Ferner kann zum Beispiel eine Menge von aus dem Beschichter auf das Baufeld ausgegebenem Partikelmaterial auf einfache Art und/oder zuverlässig eingestellt und/oder dosiert und/oder gesteuert werden.

Um die beiden langen Seitenwände zumindest in einem jeweiligen an den Ausgabespalt angrenzenden unteren Abschnitt davon relativ zueinander zu bewegen, kann zum Beispiel (zumindest) ein an den Ausgabespalt angrenzender (bewegbarer) unterer Abschnitt einer der beiden langen Seitenwände in Richtung eines an den Ausgabespalt angrenzenden (nicht-bewegbaren) unteren Abschnitts der anderen der beiden langen Seitenwände bewegbar sein (bzw. bewegt werden). Zum Beispiel kann hierzu eine erste (bewegbare) der beiden langen Seitenwände vollständig in Richtung (zumindest eines Teils) der zweiten (nicht-bewegbaren) der beiden langen Seitenwand bewegbar sein (bzw. bewegt werden). Alternativ können zum Beispiel die (beiden) an den Ausgabespalt angrenzenden (bewegbaren) unteren Abschnitte der beiden langen Seitenwände (jeweils) in Richtung aufeinander zu bewegbar sein (bzw. bewegt werden).

Der innere Hohlraum zur Aufnahme von Partikelmaterial kann zum Beispiel von dem Behälter definiert und/oder ausgebildet sein. Der Behälter kann zum Beispiel an jedem Längsende eine kurze Seitenwand aufweisen. Der Behälter kann zum Beispiel zwei kurze Seitenwände aufweisen. Der Ausgabespalt kann zum Beispiel an einem unteren Ende des Behälters angeordnet sein. Der Ausgabespalt kann zum Beispiel von den beiden unteren Enden (zum Beispiel den beiden unteren Kanten) der beiden langen Seitenwände zumindest mitausgebildet sein, zum Beispiel ausgebildet sein. Zum Beispiel kann eine (erste) der beiden langen Seitenwände (relativ)bewegbar sein und die andere (zweite) der beiden langen Seitenwände kann nicht-(relativ)bewegbar sein. Zum Beispiel können die beiden langen Seitenwände (relativ)bewegbar sein. Zum Beispiel kann ein an den Ausgabespalt angrenzender unterer Abschnitt einer (ersten) der beiden langen Seitenwände (relativ)bewegbar sein und ein an den Ausgabespalt angrenzender unterer Abschnitt der anderen (zweiten) der beiden langen Seitenwände kann nicht-(relativ)bewegbar sein. Zum Beispiel können die beiden an den Ausgabespalt angrenzenden unteren Abschnitte der beiden langen Seitenwände (jeweils) (relativ)bewegbar sein.

Die erste Einstellvorrichtung kann zum Beispiel dazu eingerichtet sein, um die beiden langen Seitenwände zumindest in einem jeweiligen an den Ausgabespalt angrenzenden unteren Abschnitt davon relativ zueinander zu schwenken, um dadurch die Breite des Ausgabespalts variabel einzustellen. Die Breite des Ausgabespalts kann zum Beispiel durch eine Schwenkbewegung, zum Beispiel durch eine Schwenkbewegung der an den Ausgabespalt angrenzenden unteren Abschnitte der beiden langen Seitenwände relativ zueinander, variabel einstellbar sein bzw. eingestellt werden. Eine/die Schwenkachse kann zum Beispiel außerhalb des Behälters (zum Beispiel außerhalb des inneren Hohlraums) angeordnet sein. Die Schwenkachse kann zum Beispiel (im Wesentlichen) parallel zu einer/der Längsachse des Behälters sein. Die Schwenkachse kann zum Beispiel in Vertikalrichtung zwischen der ersten Einstellvorrichtung und dem Ausgabespalt angeordnet sein. Durch eine Schwenkbewegung kann zum Beispiel auf einfache Art und/oder zuverlässig die Breite des Ausgabespalts variabel einstellbar sein bzw. eingestellt werden.

Der Beschichter kann zum Beispiel eine langgestreckte (bzw. längliche) Trägerstruktur aufweisen, an welcher der Behälter und die erste Einstellvorrichtung angebracht sind.

Zum Beispiel kann eine Längsachse der Trägerstruktur (im Wesentlichen) parallel zu einer Längsachse des Behälters sein. Der Behälter kann zum Beispiel seitlich an die Trägerstruktur angeschlossen sein. Die erste Einstellvorrichtung kann zum Beispiel direkt an und/oder auf bzw. an einer Oberseite der Trägerstruktur angebracht sein. Diejenige lange Seitenwand, die der Trägerstruktur des Beschichters abgewandt ist ("äußere Seitenwand"), kann zum Beispiel zumindest in einem unteren Abschnitt davon, zum Beispiel vollständig, indirekt über die erste Einstellvorrichtung an der Trägerstruktur angebracht sein. Die erste Einstellvorrichtung kann zum Beispiel eingerichtet sein, um diejenige lange Seitenwand, die der Trägerstruktur des Beschichters abgewandt ist, in zumindest dem an den Ausgabespalt angrenzenden unteren Abschnitt davon zu bewegen, zum Beispiel zu schwenken. Zum Beispiel kann zumindest ein unterer Abschnitt derjenigen langen Seitenwand, die der Trägerstruktur des Beschichters zugewandt ist, nicht-(relativ)bewegbar sein (zumindest nicht bewegbar zu dem Zweck des Einstellens der Spaltbreite, wobei zum Beispiel eine Bewegung infolge des optionalen Streichelements möglich ist, welches als Schwingklinge ausgebildet sein kann). Zum Beispiel kann (zumindest) ein unterer Abschnitt derjenigen langen Seitenwand, die der Trägerstruktur des Beschichters zugewandt ist, fest an der Trägerstruktur angebracht sein und/oder bewegungsentkoppelt von der (Relativ- )Bewegung der äußeren Seitenwand. Als die der Trägerstruktur des Beschichters abgewandte lange Seitenwand (des Behälters) wird diejenige der beiden langen Seitenwände bezeichnet, die sich in Richtung orthogonal zur Längsrichtung der Trägerstruktur weiter von der Trägerstruktur entfernt befindet. Durch eine Bewegung zumindest des unteren Abschnitts derjenigen lange Seitenwand, die der Trägerstruktur des Beschichters abgewandt ist, kann zum Beispiel auf einfache Art die Breite des Ausgabespalts variabel einstellbar sein bzw. eingestellt werden.

Die erste Einstellvorrichtung kann zum Beispiel eingerichtet sein, um die gesamte der Trägerstruktur abgewandte lange Seitenwand des Behälters zu bewegen, zum Beispiel zu schwenken. Dadurch kann zum Beispiel auf einfache Art die Breite des Ausgabespalts variabel einstellbar sein bzw. eingestellt werden.

Die der Trägerstruktur (des Beschichters) zugewandte lange Seitenwand des Behälters ("innere Seitenwand") kann zum Beispiel in zumindest einen oberen Abschnitt und einen unteren Abschnitt unterteilt sein, welche zum Beispiel bewegungsentkoppelt sein können. Die erste Einstellvorrichtung kann zum Beispiel eingerichtet sein, um die gesamte der Trägerstruktur abgewandte lange Seitenwand des Behälters gemeinsam mit dem oberen Abschnitt der der Trägerstruktur zugewandten langen Seitenwand des Behälters zu bewegen, zum Beispiel zu schwenken. Dadurch kann zum Beispiel auf einfache Art die Breite des Ausgabespalts variabel einstellbar sein bzw. eingestellt werden. Der obere Abschnitt der der Trägerstruktur zugewandten langen Seitenwand des Behälters kann zu diesem Zweck zum Beispiel indirekt über die erste Einstellvorrichtung an der Trägerstruktur angebracht sein.

Die der Trägerstruktur abgewandte lange Seitenwand des Behälters kann zum Beispiel mit dem oberen Abschnitt der der Trägerstruktur zugewandten langen Seitenwand des Behälters in Querrichtung versteift sein (zum Beispiel mittels eines oder mehrerer Versteifungselemente), zum Beispiel in Längsrichtung des Behälters an einer Position (zum Beispiel einer Position in dem Behälter, zum Beispiel einer Position zwischen den Längsenden des Behälters) oder an mehreren Positionen (zum Beispiel in dem Behälter, zum Beispiel zwischen den Längsenden des Behälters) hintereinander, zum Beispiel mittels eines jeweiligen Blechs, welches optional mit einem Durchgangsloch versehen ist, um eine in dem Behälter aufgenommene Partikelmaterial-Verteilerschnecke hindurchzuführen. Dadurch kann zum Beispiel eine Bewegung der beiden langen Seitenwände zumindest in einem jeweiligen an den Ausgabespalt angrenzenden unteren Abschnitt davon relativ zueinander auf einfache Art durchgeführt werden, so dass die Breite des Ausgabespalts auf einfache Art variabel einstellbar ist. Als die der Trägerstruktur des Beschichters zugewandte lange Seitenwand des Behälters wird diejenige der beiden langen Seitenwände bezeichnet, die sich in Richtung orthogonal zur Längsrichtung der Trägerstruktur näher an der Trägerstruktur befindet. Zum Beispiel kann die der Trägerstruktur abgewandte lange Seitenwand des Behälters mit dem oberen Abschnitt der der Trägerstruktur zugewandten langen Seitenwand des Behälters über die Bleche verbunden sein.

Der Beschichter kann zum Beispiel ein langgestrecktes Abstreifelement aufweisen. Das Abstreifelement kann zum Beispiel an dem unteren Abschnitt der der Trägerstruktur zugewandten langen Seitenwand des Behälters angebracht sein. Das Abstreifelement kann zum Beispiel die Form eines T-Profils haben und/oder den Ausgabespalt auf einer (inneren) Seite des Spalts unmittelbar begrenzen/definieren, zum Beispiel mit einem Schenkel des T-Profils. Das Abstreifelement kann zum Beispiel die der Trägerstruktur zugewandte lange Seitenwand des Behälters (zum Beispiel den unteren Abschnitt davon) zumindest mitausbilden. Das Abstreifelement kann zum Beispiel Teil der der Trägerstruktur zugewandten langen Seitenwand des Behälters sein. Der untere Abschnitt der der Trägerstruktur zugewandten langen Seitenwand des Behälters kann zum Beispiel von dem Abstreifelement zumindest mitausgebildet sein, zum Beispiel ausgebildet sein. Dadurch kann zum Beispiel ein Aufbau des Beschichters vereinfacht werden und/oder das Partikelmaterial kann zuverlässig auf ein/das Baufeld aufgebracht werden.

Das Abstreifelement kann zum Beispiel als Schwingklinge ausgebildet sein. Die Schwingklinge kann zum Beispiel von einem an der Trägerstruktur angebrachten Schwingantrieb anregbar sein. Die Schwingklinge kann zum Beispiel linear in Richtung parallel zum Baufeld anregbar sein. Der Schwingantrieb kann zum Beispiel einen Exzentermechanismus aufweisen. Der Schwingantrieb kann zum Beispiel einen (zum Beispiel Elektro-) Motor aufweisen, der zum Beispiel eingerichtet sein kann, um den Exzentermechanismus anzutreiben. Der Schwingantrieb kann zum Beispiel über 5 oder mehr Angriffspunkte (zum Beispiel Kontaktpunkte, zum Beispiel Lagerstellen) mit dem unteren Abschnitt der der Trägerstruktur zugewandten langen Seitenwand des Behälters in Verbindung stehen. Dadurch kann zum Beispiel eine Schwingfrequenz der Schwingklinge erhöht sein, wodurch eine Beschichtungsgeschwindigkeit des Beschichters erhöht sein kann. Ferner kann zum Beispiel das Partikelmaterial zuverlässig auf ein/das Baufeld aufgebracht werden.

Der Beschichter kann zum Beispiel eine zweite Einstellvorrichtung aufweisen, mit der ein Winkel des Abstreifelements gegenüber einem/dem Baufeld (zum Beispiel gegenüber einer vom Baufeld definierten Beschichtungsebene) einstellbar ist, zum Beispiel in einem Bereich von kleiner gleich 3°, zum Beispiel kleiner gleich 2°, zum Beispiel kleiner gleich 1°. Der Beschichter kann zum Beispiel einen Lagerbock aufweisen, der linear über ein Baufeld hinweg verfahrbar ist und an dem die Trägerstruktur schwenkbar angebracht ist. Die zweite Einstellvorrichtung kann zum Beispiel eingerichtet sein, um die Trägerstruktur gegenüber dem Lagerbock zu verschwenken, um hierdurch den Winkel des Abstreifelements einzustellen. Die zweite Einstellvorrichtung kann zum Beispiel (mindestens) einen (zum Beispiel Elektro-) Motor aufweisen, welcher wiederum zum Beispiel mit einer Steuervorrichtung in Verbindung stehen kann bzw. von dieser angesteuert werden kann.

Durch eine Anbringung des Abstreifelements an der (anderen) Seitenwand, welche nicht zum Zweck der Einstellung der Spaltbreite bewegt wird, kann die Einstellung der Spaltbreite unabhängig/losgelöst von einer Position und/oder einem Anstellwinkel des Abstreifelements erfolgen.

Der Beschichter kann zum Beispiel ein langgestrecktes Vorsprungselement aufweisen, welches an einem unteren Abschnitt der der Trägerstruktur abgewandten langen Seitenwand des Behälters angebracht ist und einen in Längsrichtung des Ausgabespalts verlaufenden, in Richtung zu der der Trägerstruktur zugewandten langen Seitenwand des Behälters vorspringenden Vorsprung hat. Ein unterer Abschnitt des langgestreckten Vorsprungselements kann zum Beispiel eine erste Seite des Ausgabespalts unmittelbar begrenzen bzw. definieren. Der Vorsprung kann zum Beispiel den Ausgabespalt mit vertikalem Abstand in horizontaler Richtung überlappen, zum Beispiel unter Überlappung eines Schenkels des optionalen T-Profils. Der Vorsprung kann zum Beispiel in Verlängerung des unteren Endes der der Trägerstruktur abgewandten langen Seitenwand des Behälters angeordnet sein. Zum Beispiel kann ein Abschnitt des langgestreckten Vorsprungselements unterhalb des Vorsprungs, der eine erste Seite des Ausgabespalts unmittelbar begrenzt/definiert, zurückgestuft sein. Das langgestreckte Vorsprungselement kann zum Beispiel einen zurückgestuften Abschnitt aufweisen, der unterhalb des Vorsprungs angeordnet ist und der eine erste Seite des Ausgabespalts unmittelbar begrenzt/definiert. Das langgestreckte Vorsprungselement kann zum Beispiel wechselbar ausgebildet sein. Zum Beispiel können eine Mehrzahl von langgestreckten Vorsprungselementen vorgesehen sein, deren jeweiliger Vorsprung und/oder jeweiliger zurückgestufter Abschnitt (zum Beispiel jeweilige Rückstufung) unterschiedlich ausgebildet bzw. dimensioniert ist. Das langgestreckte Vorsprungselement kann zum Beispiel unabhängig von der ersten Einstellvorrichtung vorgesehen sein und/oder unabhängig davon vorgesehen sein, dass die beiden langen Seitenwände zumindest in einem jeweiligen an den Ausgabespalt angrenzenden unteren Abschnitt davon relativ zueinander bewegbar sind. Das langgestreckte Vorsprungselement kann zum Beispiel an einem Beschichter vorgesehen sein, der gemäß dem Oberbegriff von Anspruch 1 ausgestaltet ist und/oder der die Merkmale des kennzeichnenden Teils von Anspruch 1 nicht aufweist. Der Vorsprung kann zum Beispiel eine äußere Oberfläche aufweisen, die der der Trägerstruktur zugewandten langen Seitenwand und/oder dem inneren Hohlraum zugewandt ist. Diese äußere Oberfläche kann zum Beispiel planar ausgebildet sein und/oder in einem Winkel bzw. geneigt angeordnet sein, insbesondere geneigt gegenüber der Horizontalen, zum Beispiel auch gegenüber der Vertikalen, und/oder in Verlängerung der Innenwand der äußeren Seitenwand angeordnet sein bzw. diese mitausbilden. Der Vorsprung kann zum Beispiel in einem Querschnitt (zum Beispiel in einem Querschnitt orthogonal zu einer Längsachse des Vorsprungselements) eine eckige Form (zum Beispiel eine viereckige Form oder eine dreieckige Form) haben.

Durch das langgestreckte Vorsprungselement kann zum Beispiel eine Kanalstruktur/Labyrinthstruktur bereitgestellt werden, die in den Ausgabespalt mündet und durch die ein Fließen/Rieselverhalten des Partikelmaterial vorgegeben/beeinflusst werden kann, zum Beispiel ein Totlaufen von Partikelmaterial in einer Parkposition des Beschichters. Durch das Vorsehen von mehreren Vorsprungselementen kann dabei für ein bestimmtes Partikelmaterial ein geeignetes Vorsprungselement ausgewählt und am Beschichter angebracht werden, so dass der Anwendungsbereich des Beschichter groß ist, ohne Einschränkungen hinnehmen zu müssen bzw. unter Gewährleistung eines geeigneten Rieselverhaltens für das jeweils aufzubringende Partikelmaterial.

Der obere Abschnitt und der untere Abschnitt der der Trägerstruktur zugewandten langen Seitenwand des Behälters können sich zum Beispiel in Vertikalrichtung überlappen. Der obere Abschnitt und der untere Abschnitt können zum Beispiel im Überlappungsbereich mit horizontalem Abstand/Spiel angeordnet sein. Der obere Abschnitt der der Trägerstruktur zugewandten langen Seitenwand des Behälters kann zum Beispiel im Überlappungsbereich der der Trägerstruktur abgewandten langen Seitenwand des Behälters näher liegen (zum Beispiel als der untere Abschnitt der der Trägerstruktur zugewandten langen Seitenwand des Behälters). Der obere Abschnitt der der Trägerstruktur zugewandten langen Seitenwand des Behälters kann zum Beispiel im Überlappungsbereich weiter von der Trägerstruktur des Beschichters entfernt sein (zum Beispiel als der untere Abschnitt der der Trägerstruktur zugewandten langen Seitenwand des Behälters). Das untere Ende des oberen Abschnitts kann zum Beispiel abgewinkelt ausgestaltet sein, zum Beispiel nach Innen hin zum inneren Hohlraum hin abgewinkelt, d.h. von dem unteren Abschnitt weg.

Der obere Abschnitt der der Trägerstruktur zugewandten langen Seitenwand des Behälters kann zum Beispiel schwenkbar an die Trägerstruktur angeschlossen sein (zum Beispiel ein mittlerer oder unterer Teil des oberen Abschnitts), zum Beispiel gemeinsam mit der äußeren Seitenwand. Der schwenkbare Anschluss des oberen Abschnitts an der Trägerstruktur kann zum Beispiel lösbar und/oder ent- und verriegelbar ausgebildet sein. Der schwenkbare Anschluss des oberen Abschnitts an der Trägerstruktur kann zum Beispiel in Vertikalrichtung unterhalb einer Position angeordnet sein, an welcher der Behälter (insbesondere ein oberer Abschnitt der äußeren Seitenwand und/oder ein oberer Teil des oberen Abschnitts der inneren Seitenwand) mit der ersten Einstellvorrichtung verbunden ist.

Die erste Einstellvorrichtung kann zum Beispiel einen oder mehrere (zum Beispiel drei oder mehr, zum Beispiel vier, zum Beispiel fünf, zum Beispiel sechs, zum Beispiel sieben) mit dem Behälter in Verbindung stehende Exzentermechanismen aufweisen, zum Beispiel mehrere in Längsrichtung des Behälters hintereinander angeordnete Exzentermechanismen, zum Beispiel mit einem jeweiligen Motor separat angetriebene/antreibbare Exzentermechanismen. Die mehreren Exzentermechanismen können zum Beispiel in Längsrichtung des Behälters hintereinander angeordnet sein. Jeder der ein oder mehreren Exzentermechanismen kann zum Beispiel mit einem separaten Motor antreibbar sein bzw. angetrieben werden. Dadurch kann zum Beispiel auf einfache Art die Breite des Ausgabespalts in Längsrichtung des Spalts variierbar sein bzw. variiert werden. Die ein oder mehreren Exzentermechanismen können zum Beispiel die Schwenkbewegung realisieren, bei schwenkbarer Lagerung von zum Beispiel zumindest dem unteren Abschnitt der äußeren Seitenwand. Alternativ können die ein oder mehreren Exzentermechanismen zum Beispiel eine Linearbewegung von zum Beispiel zumindest dem unteren Abschnitt der äußeren Seitenwand bewirken.

Die ein oder mehreren Exzentermechanismen können zum Beispiel über einen parallel zur Längsrichtung des Behälters angeordneten Längsstab mit dem Behälter in Verbindung stehen (zum Beispiel mit dem oberen Abschnitt der der Trägerstruktur zugewandten langen Seitenwand des Behälters und/oder mit der der Trägerstruktur abgewandten langen Seitenwand des Behälters, zum Beispiel mit (zumindest) dem unteren Abschnitt davon), wobei der Behälter (zum Beispiel der obere Abschnitt der der Trägerstruktur zugewandten langen Seitenwand davon und/oder die der Trägerstruktur abgewandte lange Seitenwand davon, zum Beispiel (zumindest) deren unterer Abschnitt) zum Beispiel drehbar an dem Längsstab angeschlossen sein kann und die ein oder mehreren Exzentermechanismen zum Beispiel im Wesentlichen senkrecht auf die Längsachse des Längsstabes wirken können. Dadurch kann zum Beispiel auf einfache Art die Breite des Ausgabespalts in Längsrichtung des Spalts variierbar sein bzw. variiert werden. Zudem kann hierdurch vorteilhaft der Längsstab als Drehachse eingesetzt werden, um vor/nach einem Baujob ein Reinigen des Beschichters zu ermöglichen, indem ein Teil des Behälters (zum Beispiel die äußere Wand und der obere Abschnitt der inneren Wand) um den Längsstab herum von der Trägerstruktur weggeschwenkt wird. In der weggeschwenkten Position kann der Behälter (zum Beispiel die äußere Wand und/oder der obere Abschnitt der inneren Wand) dabei zum Beispiel von ein oder mehreren Gasdruckfedern gehalten werden.

Die erste Einstellvorrichtung ist dazu eingerichtet, um die beiden langen Seitenwände zumindest in einem jeweiligen an den Ausgabespalt angrenzenden unteren Abschnitt davon derart selektiv relativ zueinander zu bewegen, dass die Breite des Ausgabespalts in Längsrichtung des Spalts variiert, zum Beispiel mit einer Differenz/Varianz von bis zu mindestens 1 mm, zum Beispiel bis zu mindestens 1,5 mm, zum Beispiel bis zu mindestens 2 mm, zum Beispiel bis zu mindestens 2,5 mm, zum Beispiel bis zu mindestens 3 mm. Zum Beispiel kann die Breite des Ausgabespalts in Längsrichtung des Spalts derart variiert werden, dass zum Beispiel an einem ersten Längsende des Ausgabespalts eine Spaltbreite von 1,5 mm eingestellt ist, in Längsrichtung des Ausgabespalts gesehen in der Mitte des Ausgabespalts eine Spaltbreite von 2,0 mm eingestellt ist und an einem zweiten Längsende des Ausgabespalts eine Spaltbreite von 2,5 mm eingestellt ist (oder umgekehrt). Alternativ kann zum Beispiel die Breite des Ausgabespalts in Längsrichtung des Spalts derart variiert werden, dass zum Beispiel an einem ersten Längsende des Ausgabespalts eine Spaltbreite von 1,5 mm eingestellt ist, in Längsrichtung des Ausgabespalts gesehen in der Mitte des Ausgabespalts eine Spaltbreite von 2,5 mm eingestellt ist und an einem zweiten Längsende des Ausgabespalts eine Spaltbreite von 1,5 mm eingestellt ist. Alternativ kann zum Beispiel die Breite des Ausgabespalts in Längsrichtung des Spalts derart variiert werden, dass zum Beispiel an einem ersten Längsende des Ausgabespalts eine Spaltbreite von 2,5 mm eingestellt ist, in Längsrichtung des Ausgabespalts gesehen in der Mitte des Ausgabespalts eine Spaltbreite von 1,5 mm eingestellt ist und an einem zweiten Längsende des Ausgabespalts eine Spaltbreite von 2,5 mm eingestellt ist.

Durch einen Ausgabespalt, dessen Breite in Längsrichtung des Spalts variiert, kann zum Beispiel ein Aufbringen von Partikelmaterial auf ein/das Baufeld besonders gleichmäßig/homogen erfolgen kann. Dadurch können zum Beispiel zuverlässig aufeinanderfolgende Partikelmaterial-Schichten mit gleichmäßigen Dicken/Stärken vollflächig/durchgängig auf das Baufeld aufgebracht werden, wodurch zum Beispiel eine Qualität der im 3D-Druck hergestellten Bauteile verbessert werden kann und eine Anzahl an Bauteilen mit unzureichender Bauteilequalität verringert werden kann. Zudem können zum Beispiel ggf. auftretende Toleranzen oder ein Verzug ausgeglichen werden.

Die erste Einstellvorrichtung kann zum Beispiel dazu eingerichtet sein, um die Breite des Ausgabespalts um maximal 5 mm und mindestens 1 mm zu verstellen, zum Beispiel um maximal 4 mm und mindestens 2 mm zu verstellen. Die erste Einstellvorrichtung kann zum Beispiel dazu eingerichtet sein, um die Breite des Ausgabespalts um maximal 5 mm zu verstellen, zum Beispiel um maximal 4 mm, zum Beispiel um maximal 3 mm, zum Beispiel um maximal 2 mm. Die erste Einstellvorrichtung kann zum Beispiel dazu eingerichtet sein, um die Breite des Ausgabespalts um mindestens 1 mm zu verstellen, zum Beispiel um mindestens 1,5 mm, zum Beispiel um mindestens 2 mm. Der Beschichter kann zum Beispiel als unidirektionaler Beschichter ausgebildet sein.

Der Beschichter und/oder der 3D-Drucker kann zum Beispiel eine Steuervorrichtung aufweisen. Die Steuervorrichtung kann zum Beispiel dazu eingerichtet sein, um die erste Einstellvorrichtung (zum Beispiel die ein oder mehreren Exzentermechanismen, zum Beispiel die ein oder mehreren Motoren, mit denen jeweils ein Exzentermechanismus antreibbar ist bzw. angetrieben wird) anzusteuern, so dass die beiden langen Seitenwände zumindest in einem jeweiligen an den Ausgabespalt angrenzenden unteren Abschnitt davon automatisiert/automatisch relativ zueinander bewegt werden, zum Beispiel in Abhängigkeit von einem verwendeten Partikelmaterial. Die Steuervorrichtung kann zum Beispiel dazu eingerichtet sein, um die zweite Einstellvorrichtung anzusteuern, so dass der Winkel des Abstreifelements gegenüber einem/dem Baufeld automatisiert/automatisch eingestellt wird, zum Beispiel in Abhängigkeit von einem verwendeten Partikelmaterial. Die Steuervorrichtung kann zum Beispiel dazu eingerichtet sein, um die oben beschriebenen Bewegungen (zum Beispiel Relativbewegungen) automatisiert/automatisch durchzuführen, zum Beispiel in Abhängigkeit von einem verwendeten Partikelmaterial. Dadurch kann zum Beispiel eine Reproduzierbarkeit der auf ein/das Baufeld aufgebrachten Partikelmaterialschicht verbessert werden, wodurch ein 3D-Druckergebnis verbessert werden kann.

Gemäß einem Aspekt der Erfindung kann ein 3D-Drucker einen Beschichter aufweisen, der wie oben beschrieben ausgestaltet ist. Der 3D-Drucker kann zum Beispiel einen Druckkopf zum selektiven Ausgeben eines Behandlungsmittels aufweisen, zum Beispiel auf eine mittels des Beschichters zuvor aufgebrachte Schicht aus losem Partikelmaterial. Der Druckkopf kann zum Beispiel Teil einer Druckvorrichtung sein, d.h. der 3D-Drucker kann zum Beispiel eine Druckvorrichtung mit einem/dem Druckkopf aufweisen.

Gemäß einem Aspekt der Erfindung kann der oben beschriebene Beschichter zum schichtweisen Auftragen von Partikelmaterial verwendet werden. Das Partikelmaterial kann zum Beispiel ausgewählt sein aus Sandpartikeln, zum Beispiel Gießereisand, und/oder Salzpartikeln, zum Beispiel für die Anwendung in der Gießtechnik, und/oder Metallpartikeln. Es versteht sich, dass dem Partikelmaterial ein oder mehrere Zuschlagstoffe zugegeben sein können und/oder das Partikelmaterial zudem eine Bindemittelkomponente enthalten kann.

Gemäß einem Aspekt der Erfindung kann der oben beschriebene 3D-Drucker zur schichtweisen Herstellung einer Gießform und/oder eines Gießkerns verwendet werden. Die Gießform und/oder der Gießkern können zum Beispiel mittels Binder-Jettings hergestellt werden.

Beispielgebende, aber nicht einschränkende Ausführungsformen der Erfindung sind in den Figuren dargestellt und werden im Folgenden näher erläutert.
Figur 1 zeigt eine erste Perspektivansicht eines Beschichters für einen 3D-Drucker gemäß einer ersten Ausführungsform der Erfindung.
Figur 2 zeigt eine zweite Perspektivansicht des Beschichters für einen 3D-Drucker gemäß der ersten Ausführungsform der Erfindung.
Figur 3 zeigt eine erste perspektivische Querschnittansicht des Beschichters für einen 3D-Drucker gemäß der ersten Ausführungsform der Erfindung.
Figur 4 zeigt eine zweite perspektivische Querschnittansicht des Beschichters für einen 3D-Drucker gemäß der ersten Ausführungsform der Erfindung.
Figur 5 zeigt eine dritte perspektivische Querschnittansicht des Beschichters für einen 3D-Drucker gemäß der ersten Ausführungsform der Erfindung.
Figur 6 zeigt eine vierte perspektivische Querschnittansicht des Beschichters für einen 3D-Drucker gemäß der ersten Ausführungsform der Erfindung.
Figur 7 zeigt eine perspektivische Querschnittansicht eines Beschichters für einen 3D-Drucker gemäß einer zweiten Ausführungsform der Erfindung.

In der folgenden Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

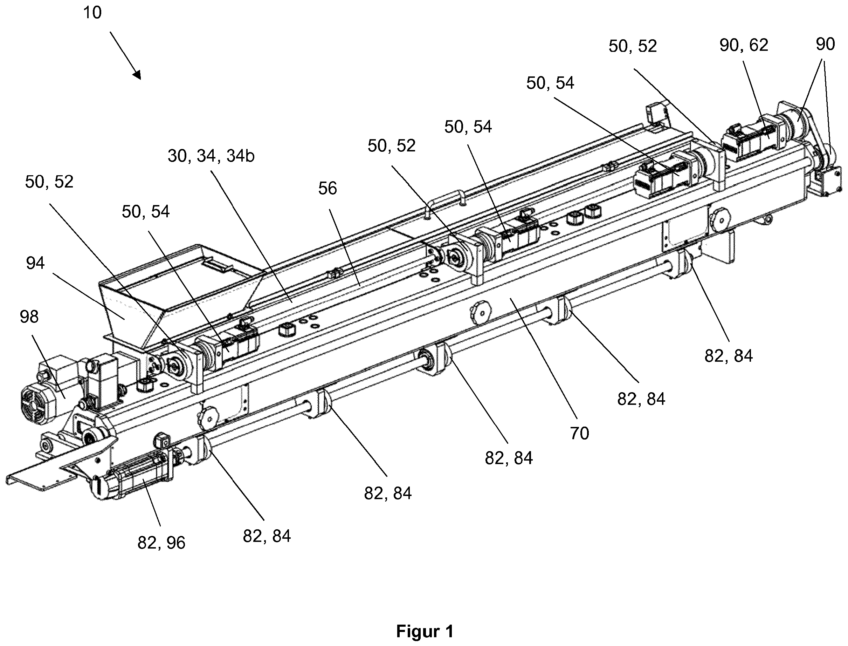

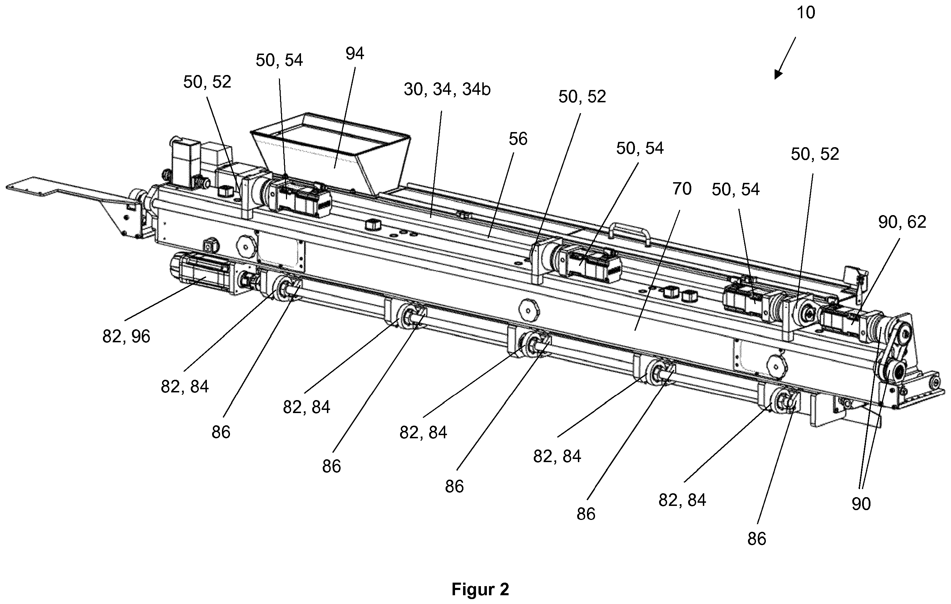

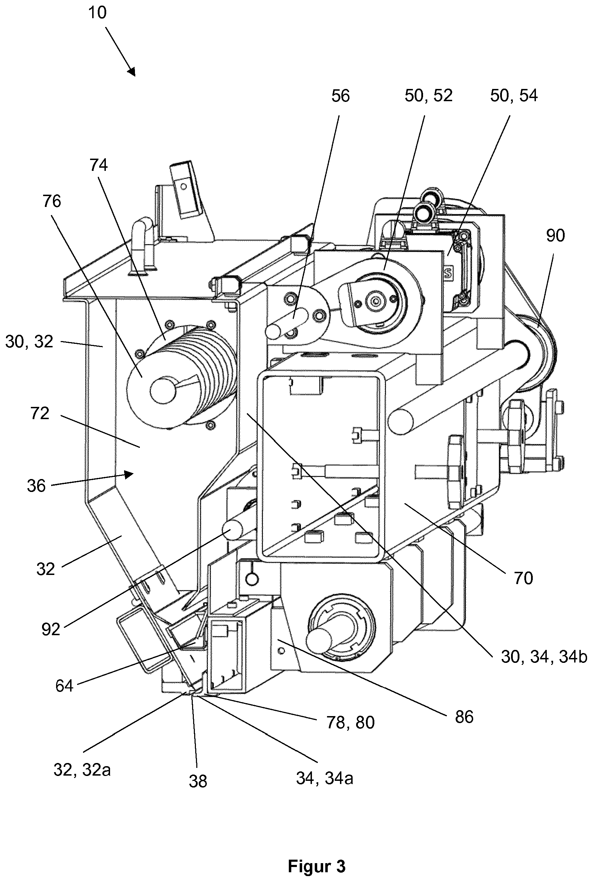

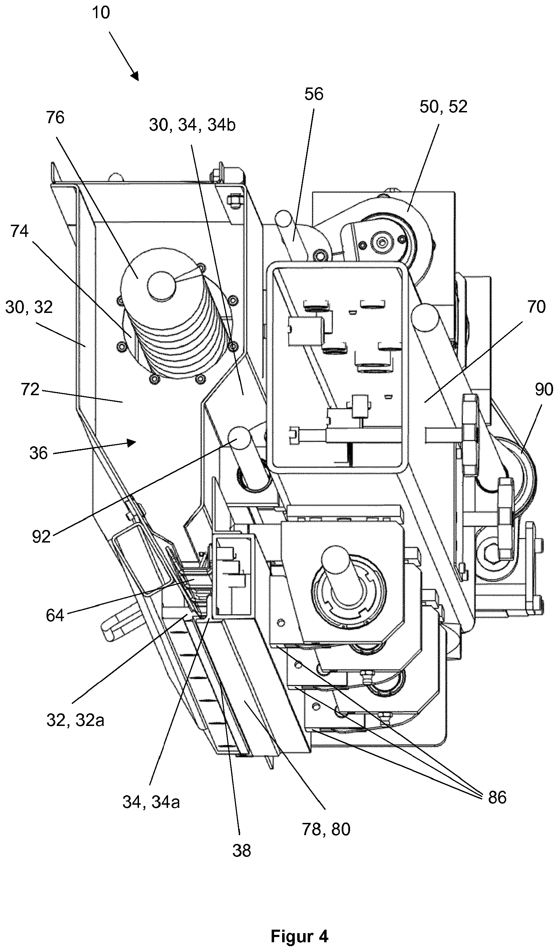

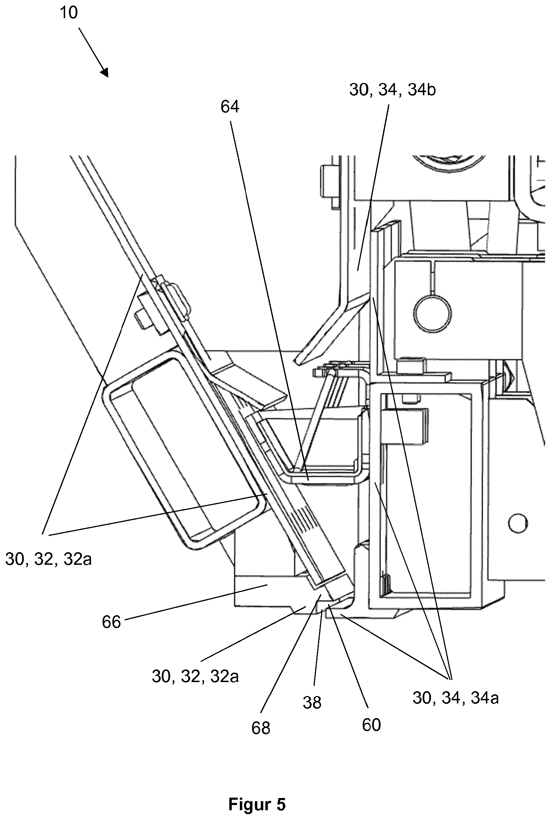

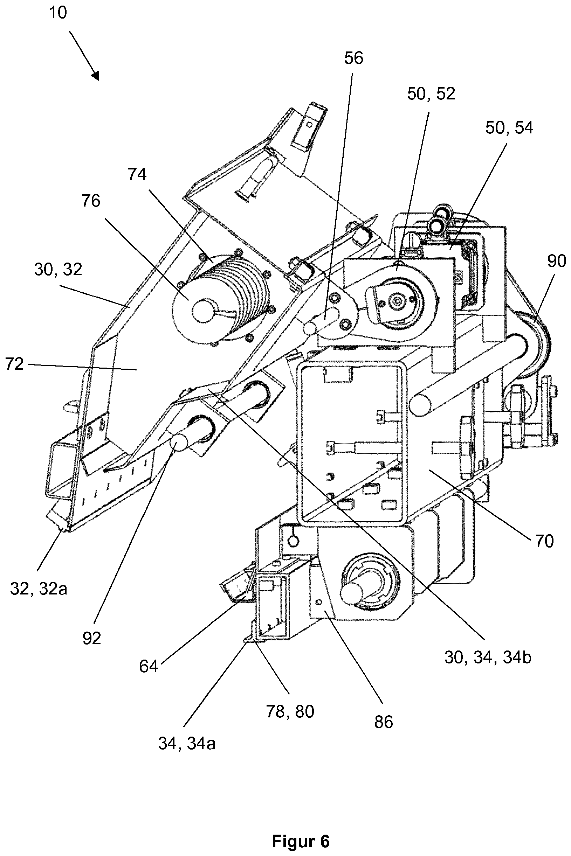

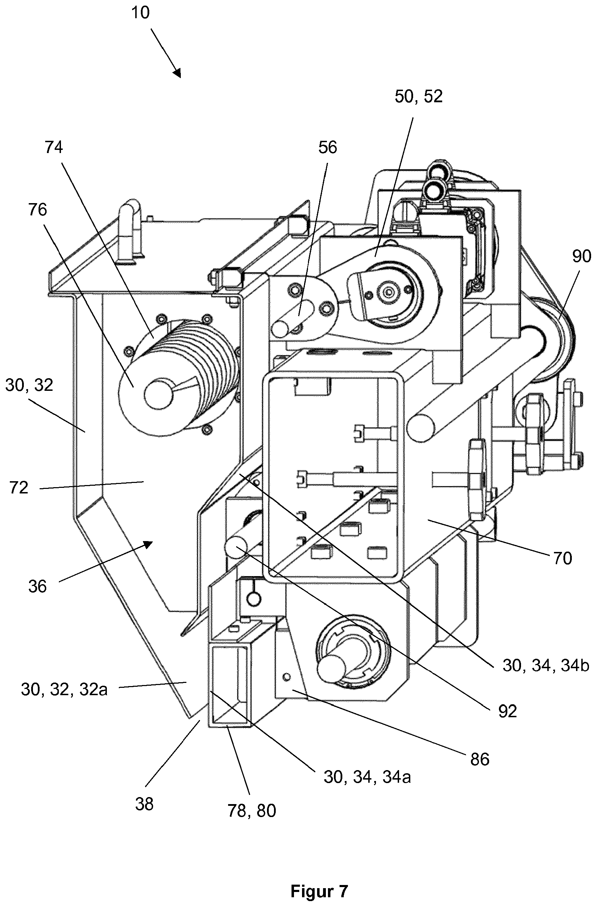

Figuren 1 bis 6 zeigen einen Beschichter für einen 3D-Drucker gemäß einer ersten Ausführungsform der Erfindung. Figuren 1 und 2 zeigen Perspektivansichten des Beschichters gemäß der ersten Ausführungsform. Figuren 3 bis 6 zeigen perspektivische Querschnittansichten (bzw. geschnittene Perspektivansichten) des Beschichters gemäß der ersten Ausführungsform, in denen die Schnittebene orthogonal zu der Längsachse des Beschichters ist (d.h. in denen der Beschichter orthogonal zu seiner Längsachse geschnitten ist). Figuren 3 und 4 zeigen die gleichen Schnitte aus unterschiedlichen Perspektiven. Figur 5 zeigt den gleichen Schnitt wie Figur 3, wobei die Perspektive verschieden ist und in Figur 5 ein unterer Abschnitt des Beschichters gezeigt ist. Figuren 1 bis 5 zeigen den Beschichter in einem Partikelmaterial-Auftrag-Zustand (d.h. in einem Zustand, in dem der Beschichter zum Aufragen von Partikelmaterial verwendbar ist, zum Beispiel über ein Baufeld verfahrbar ist). Figur 6 zeigt den Beschichter in einem Aufklapp-Zustand (d.h. in einem Zustand, in dem der Beschichter aufgeklappt ist und zum Beispiel für eine Wartung und/oder Reinigung einfach zugänglich ist). Figur 7 zeigt einen Beschichter für einen 3D-Drucker gemäß einer zweiten Ausführungsform der Erfindung. Figur 7 zeigt eine perspektivische Querschnittansicht (bzw. geschnittene Perspektivansicht) des Beschichters gemäß der zweiten Ausführungsform, in der die Schnittebene orthogonal zu der Längsachse des Beschichters ist (d.h. in der der Beschichter orthogonal zu seiner Längsachse geschnitten ist).

Wie in den Figuren 1 bis 7 gezeigt hat ein Beschichter 10 für einen 3D-Drucker einen langgestreckten Behälter 30, der zwei gegenüberliegende, lange Seitenwände 32, 34 aufweist, zwischen denen ein innerer Hohlraum 36 zur Aufnahme von Partikelmaterial gebildet ist, der in einem länglichen Ausgabespalt 38 zum Ausgeben des Partikelmaterials aus dem Behälter 30 auf ein Baufeld mündet, und eine erste Einstellvorrichtung 50, die dazu eingerichtet ist, um die beiden langen Seitenwände 32, 34 zumindest in einem jeweiligen an den Ausgabespalt 38 angrenzenden unteren Abschnitt 32a, 34a davon relativ zueinander zu bewegen, um dadurch die Breite des Ausgabespalts 38 variabel einzustellen. Der Behälter 30 kann zum Beispiel den inneren Hohlraum 36 definieren bzw. ausbilden. Der Ausgabespalt 38 kann sich zum Beispiel an einem unteren Ende des Behälters 30 befinden. Der Ausgabespalt 38 kann zum Beispiel von den beiden unteren Enden (zum Beispiel den beiden unteren Kanten) der beiden langen Seitenwände 32, 34 ausgebildet bzw. definiert sein.

Die erste Einstellvorrichtung 50 kann zum Beispiel dazu eingerichtet sein, um die beiden langen Seitenwände 32, 34 zumindest in einem jeweiligen an den Ausgabespalt 38 angrenzenden unteren Abschnitt 32a, 34a davon relativ zueinander zu schwenken, um dadurch die Breite des Ausgabespalts 38 variabel einzustellen. Die Schwenkbewegung kann zum Beispiel um eine Schwenkachse 92 erfolgen. Dazu kann zum Beispiel zumindest der untere Abschnitt 32a, 34a von einer der beiden langen Seitenwände 32, 34 um die Schwenkachse 92 schwenkbar sein bzw. geschwenkt werden. Die Schwenkachse 92 kann zum Beispiel außerhalb des Behälters 30 angeordnet sein, zum Beispiel benachbart zu einer der beiden langen Seitenwände 32, 34 des Behälters.

Wie in den Figuren 1-7 gezeigt kann der Beschichter 10 zum Beispiel eine langgestreckte Trägerstruktur 70 aufweisen, an welcher der Behälter 30 (zum Beispiel (zumindest) ein Teil des Behälters 30) und die erste Einstellvorrichtung 50 angebracht sind. Die erste Einstellvorrichtung 50 kann zum Beispiel (direkt) auf einer Oberseite der Trägerstruktur 70 angebracht sein. Der Behälter 30 kann zum Beispiel mit seiner der Trägerstruktur 70 zugewandten langen Seitenwand 34, zum Beispiel an einem oberen Abschnitt 34b davon, einerseits (indirekt) über die erste Einstellvorrichtung 50 mit der Trägerstruktur 70 verbunden sein und andererseits (direkt) schwenkbar mit der Trägerstruktur 70 verbunden sein, zum Beispiel unterhalb der Verbindung mit der ersten Einstellvorrichtung 50.

Die erste Einstellvorrichtung 50 kann zum Beispiel eingerichtet sein, um diejenige lange Seitenwand 32, die der Trägerstruktur 70 des Beschichters 10 abgewandt ist, in zumindest dem an den Ausgabespalt 38 angrenzenden unteren Abschnitt 32a davon zu bewegen, zum Beispiel zu schwenken, zum Beispiel um die Schwenkachse 92.

Die erste Einstellvorrichtung 50 kann zum Beispiel eingerichtet sein, um die gesamte der Trägerstruktur 70 abgewandte lange Seitenwand 32 des Behälters 30 zu bewegen, zum Beispiel zu schwenken, zum Beispiel um die Schwenkachse 92.

Wie in den Figuren 3 bis 7 gezeigt kann die der Trägerstruktur 70 zugewandte lange Seitenwand 34 des Behälters 30 in zumindest einen oberen Abschnitt 34b und einen unteren Abschnitt 34a unterteilt sein, welche bewegungsentkoppelt sind. Der untere Abschnitt 34a kann zum Beispiel mehrere (Bau-)Teile (zum Beispiel zwei oder drei oder mehr (Bau-)Teile) aufweisen bzw. von diesen ausgebildet sein. Alternativ kann der untere Abschnitt 34a zum Beispiel von einem (Bau-)Teil ausgebildet sein. Die Schwenkachse 92 kann zum Beispiel benachbart zu der der Trägerstruktur 70 zugewandten langen Seitenwand 34 des Behälters 30 angeordnet sein, zum Beispiel dem oberen Abschnitt 34b davon.

Die erste Einstellvorrichtung 50 kann zum Beispiel eingerichtet sein, um die gesamte der Trägerstruktur 70 abgewandte lange Seitenwand 32 des Behälters 30 gemeinsam mit dem oberen Abschnitt 34b der der Trägerstruktur 70 zugewandten langen Seitenwand 34 des Behälters 30 zu bewegen, zum Beispiel zu schwenken, zum Beispiel um die Schwenkachse 92.

Wie in den Figuren 3, 4, 6 und 7 gezeigt kann zum Beispiel die der Trägerstruktur 70 abgewandte lange Seitenwand 32 des Behälters 30 mit dem oberen Abschnitt 34b der der Trägerstruktur 70 zugewandten langen Seitenwand 34 des Behälters 30 in Querrichtung versteift sein, zum Beispiel in Längsrichtung des Behälters 30 an einer Position (zum Beispiel in der Mitte des Behälters 30) oder an mehreren Positionen hintereinander, zum Beispiel mittels eines jeweiligen Blechs 72, welches optional mit einem Durchgangsloch 74 versehen ist, um eine in dem Behälter 30 aufgenommene Partikelmaterial-Verteilerschnecke 76 hindurchzuführen.

Der Beschichter kann zum Beispiel eine Partikelmaterial-Verteilerschnecke 76 aufweisen. Die Partikelmaterial-Verteilerschnecke 76 kann zum Beispiel in dem Behälter 30 angeordnet sein, zum Beispiel in dem inneren Hohlraum 36. Die Partikelmaterial-Verteilerschnecke 76 kann zum Beispiel eingerichtet sein, um ein Partikelmaterial in dem Behälter 30 (zum Beispiel in dem inneren Hohlraum 36 davon) gleichmäßig zu verteilen. Zum Beispiel kann das Partikelmaterial über eine Partikelmaterial-Zuführöffnung (zum Beispiel einen Partikelmaterial-Zuführtrichter 94) dem inneren Hohlraum 36 zugeführt werden. Die Partikelmaterial-Zuführöffnung bzw. der Partikelmaterial-Zuführtrichter 94 kann zum Beispiel benachbart zu bzw. an einem Längsende des Beschichters 10, zum Beispiel benachbart zu bzw. an einem Längsende des Behälters 30, angeordnet sein. Die Partikelmaterial-Verteilerschnecke 76 kann zum Beispiel von einem (Elektro-)Motor 98 antreibbar sein.

Wie in den Figuren 3 bis 7 gezeigt kann der Beschichter zum Beispiel ein langgestrecktes Abstreifelement 78 haben. Das Abstreifelement 78 kann zum Beispiel an einem/dem unteren Abschnitt 34a der der Trägerstruktur 70 zugewandten langen Seitenwand 34 des Behälters 30 angebracht sein und/oder kann zum Beispiel die Form eines T-Profils haben.

Wie in den Figuren 3 bis 6 gezeigt kann zum Beispiel das Abstreifelement 78 den unteren Abschnitt 34a der der Trägerstruktur 70 zugewandten langen Seitenwand 34 des Behälters 30 mitausbilden. Zum Beispiel kann ein unteres Ende (zum Beispiel eine untere Kante) der der Trägerstruktur 70 zugewandten langen Seitenwand 34 des Behälters 30 (zum Beispiel des unteren Abschnitts 34a davon) von dem Abstreifelement 78 zumindest mitausgebildet sein, zum Beispiel ausgebildet sein.

Wie in Figur 7 gezeigt können zum Beispiel das Abstreifelement 78 und zumindest der untere Abschnitt 34a der der Trägerstruktur 70 zugewandten langen Seitenwand 34 des Behälters 30 integral ausgebildet sein, zum Beispiel von einem länglichen bzw. langgestreckten Hohlprofil, welches zum Beispiel im Querschnitt rechteckig ausgebildet ist.

Das Abstreifelement 78 kann zum Beispiel optional als Schwingklinge 80 ausgebildet sein, die zum Beispiel von einem an der Trägerstruktur 70 angebrachten Schwingantrieb 82 anregbar ist, zum Beispiel linear in Richtung parallel zum Baufeld. Der Schwingantrieb 82 kann zum Beispiel einen Exzentermechanismus 84 aufweisen und/oder über 5 oder mehr Angriffspunkte 86 mit dem unteren Abschnitt 34a der der Trägerstruktur 70 zugewandten langen Seitenwand 34 des Behälters 30 in Verbindung stehen. Der Schwingantrieb 82 kann zum Beispiel einen (Elektro-)Motor 96 aufweisen.

Der Beschichter 10 kann zum Beispiel eine zweite Einstellvorrichtung 90 haben, mit der ein Winkel des Abstreifelements 78 gegenüber einem Baufeld einstellbar ist, zum Beispiel in einem Bereich von kleiner gleich 3°, zum Beispiel kleiner gleich 2°, zum Beispiel kleiner gleich 1°. Der Beschichter 10 kann zum Beispiel einen Lagerbock haben, der linear über ein Baufeld hinweg verfahrbar ist und an dem die Trägerstruktur 70 schwenkbar angebracht ist. Die zweite Einstellvorrichtung 90 kann zum Beispiel eingerichtet sein, um die Trägerstruktur 70 gegenüber dem Lagerbock zu verschwenken, um hierdurch den Winkel des Abstreifelements 78 einzustellen. Die zweite Einstellvorrichtung 90 kann zum Beispiel einen (Elektro-)Motor 62 haben.

Wie in Figur 5 gezeigt kann der Beschichter zum Beispiel ein langgestrecktes Vorsprungselement 66 aufweisen, welches an einem unteren Abschnitt 32a der der Trägerstruktur 70 abgewandten langen Seitenwand 32 des Behälters 30 angebracht ist und einen in Längsrichtung des Ausgabespalts 38 verlaufenden, in Richtung zu der der Trägerstruktur 70 zugewandten langen Seitenwand 34 vorspringenden Vorsprung 68 hat. Ein unterer Abschnitt des langgestreckten Vorsprungselements 66 kann zum Beispiel eine erste (Längs-)Seite des Ausgabespalts 38 unmittelbar begrenzen/definieren. Der Vorsprung 68 kann zum Beispiel den Ausgabespalt 38 mit vertikalem Abstand in horizontaler Richtung überlappen, zum Beispiel unter Überlappung eines Schenkels des optionalen T-Profils des Abstreifelements 78. Der Vorsprung 68 (zum Beispiel eine Fläche davon) kann zum Beispiel in Verlängerung des unteren Endes der der Trägerstruktur 70 abgewandten langen Seitenwand 32 angeordnet sein. Zum Beispiel kann ein unterhalb des Vorsprungs 68 angeordneter Abschnitt 60 des langgestreckten Vorsprungselements 66, der eine erste Seite des Ausgabespalts 38 unmittelbar begrenzt/definiert, zurückgestuft sein. Das langgestreckte Vorsprungselement 66 kann zum Beispiel (aus)wechselbar ausgebildet sein. Zum Beispiel können eine Mehrzahl von unterschiedlichen langgestreckten Vorsprungselementen 66 vorgesehen sein, deren jeweiliger Vorsprung 68 und/oder zurückgestufter Abschnitt 60 unterschiedlich ausgebildet/dimensioniert ist. Zum Beispiel kann durch eine unterschiedliche Dimensionierung/Ausbildung des Vorsprungs 68 und/oder des zurückgestuften Abschnitts 60 der vertikale Abstand und/oder die horizontale Überlappung und/oder ein Partikelmaterial-Fluss (zum Beispiel aus dem Behälter auf das Baufeld) beeinflusst (zum Beispiel eingestellt und/oder gesteuert) werden. Das langgestreckte Vorsprungselement 66 und/oder der Vorsprung 68 und/oder der untere Abschnitt des langgestreckten Vorsprungselements 66 kann zum Beispiel die der Trägerstruktur 70 abgewandte lange Seitenwand 32 des Behälters 30, zum Beispiel einen an den Ausgabespalt 38 angrenzenden unteren Abschnitt 32a davon, zumindest mitausbilden und/oder kann zum Beispiel Teil der der Trägerstruktur 70 abgewandten langen Seitenwand 32 des Behälters 30 sein. Der untere Abschnitt 32a der der Trägerstruktur 70 abgewandten langen Seitenwand 32 des Behälters 30 kann zum Beispiel von dem langgestreckten Vorsprungselement 66 und/oder dem Vorsprung 68 und/oder dem unteren Abschnitt des langgestreckten Vorsprungselements 66 zumindest mitausgebildet sein, zum Beispiel ausgebildet sein. Der Vorsprung 68 kann zum Beispiel ausgebildet sein, so dass eine (Ober-)Fläche des Vorsprungs 68, die der der Trägerstruktur 70 zugewandten langen Seitenwand 34 zugewandt ist und/oder gegenüber liegt, in einem Winkel von größer 0° (zum Beispiel größer oder gleich 10°, zum Beispiel größer oder gleich 20°, zum Beispiel größer oder gleich 30°, zum Beispiel größer oder gleich 40°, zum Beispiel größer oder gleich 50°, zum Beispiel größer oder gleich 60°, zum Beispiel größer oder gleich 70°, zum Beispiel größer oder gleich 80°) und/oder kleiner oder gleich 90° (zum Beispiel kleiner oder gleich 80°, zum Beispiel kleiner oder gleich 70°, zum Beispiel kleiner oder gleich 60°, zum Beispiel kleiner oder gleich 50°, zum Beispiel kleiner oder gleich 40°, zum Beispiel kleiner oder gleich 30°) zu einer Horizontalebene (zum Beispiel der Baufeldebene) angeordnet ist. Der Vorsprung 68 kann zum Beispiel in einem Querschnitt (zum Beispiel in einem Querschnitt orthogonal zu einer Längsachse des Vorsprungselements 66) eine eckige Form (zum Beispiel eine viereckige Form oder eine dreieckige Form) haben.

Wie in den Figuren 3, 4, 5 und 7 gezeigt können sich zum Beispiel der obere Abschnitt 34b und der untere Abschnitt 34a der der Trägerstruktur 70 zugewandten langen Seitenwand 34 des Behälters 30 in Vertikalrichtung überlappen. Der obere Abschnitt 34b und der untere Abschnitt 34a können im Überlappungsbereich zum Beispiel mit horizontalem Abstand/Spiel angeordnet sein. Der obere Abschnitt 34b der der Trägerstruktur 70 zugewandten langen Seitenwand 34 des Behälters 30 kann zum Beispiel im Überlappungsbereich der der Trägerstruktur 70 abgewandten langen Seitenwand 32 des Behälters 30 näher liegen.

Der obere Abschnitt 34b der der Trägerstruktur 70 zugewandten langen Seitenwand 34 des Behälters 30 kann zum Beispiel schwenkbar an die Trägerstruktur 70 angeschlossen sein, zum Beispiel über die Schwenkachse 92. Der schwenkbare Anschluss des oberen Abschnitts 34b an der Trägerstruktur 70 kann zum Beispiel lösbar und/oder ent- und verriegelbar ausgebildet sein, um ein Aufklappen des Beschichters 10 für eine Reinigung desselben zu ermöglichen bzw. zu diesem Zweck den Anschluss an die Schwenkachse 92 freizugeben. Der schwenkbare Anschluss des oberen Abschnitts 34b an der Trägerstruktur 70 kann zum Beispiel in Vertikalrichtung unterhalb einer Position angeordnet ist, an welcher der Behälter 30 mit der ersten Einstellvorrichtung 50 verbunden ist.

Die erste Einstellvorrichtung 50 kann zum Beispiel einen oder mehrere (zum Beispiel drei oder mehr) mit dem Behälter 30 in Verbindung stehende Exzentermechanismen 52 aufweisen. Die erste Einstellvorrichtung 50 kann zum Beispiel mehrere (zum Beispiel drei oder mehr) in Längsrichtung des Behälters 30 hintereinander angeordnete Exzentermechanismen 52 aufweisen. Die ein oder mehreren Exzentermechanismen 52 können zum Beispiel mit einem jeweiligen (Elektro-)Motor 54 separat antreibbar sein bzw. angetrieben werden. Dadurch kann zum Beispiel die erste Einstellvorrichtung 50 dazu eingerichtet sein, um die beiden langen Seitenwände 32, 34 zumindest in einem jeweiligen an den Ausgabespalt 38 angrenzenden unteren Abschnitt 32a, 34a davon derart selektiv relativ zueinander zu bewegen, zum Beispiel zu schwenken, dass die Breite des Ausgabespalts 38 in Längsrichtung des Spalts variiert.

Wie in den Figuren 1 und 2 gezeigt kann die erste Einstellvorrichtung 50 zum Beispiel drei in Längsrichtung des Behälters 30 hintereinander angeordnete, mit dem Behälter 30 in Verbindung stehende und mit einem jeweiligen Motor 54 separat angetriebene Exzentermechanismen 52 aufweisen, die zum Beispiel auf/an der Trägerstruktur 70 angeordnet sein können, zum Beispiel einer Oberseite davon. Die Exzentermechanismen 52 und/oder die jeweiligen Motoren 54 können zum Beispiel derart einstellbar/ansteuerbar sein bzw. eingestellt/angesteuert werden, dass die beiden langen Seitenwände 32, 34 zumindest in einem jeweiligen an den Ausgabespalt 38 angrenzenden unteren Abschnitt 32a, 34a davon derart selektiv relativ zueinander bewegbar sind bzw. bewegt werden (zum Beispiel schwenkbar sind bzw. geschwenkt werden), dass die Breite des Ausgabespalts 38 in Längsrichtung des Spalts variierbar ist bzw. variiert.

Die ein oder mehreren Exzentermechanismen 52 können zum Beispiel über einen parallel zur Längsrichtung des Behälters 30 angeordneten Längsstab 56 mit dem Behälter 30 in Verbindung stehen, wobei der Behälter 30 drehbar an dem Längsstab 56 angeschlossen ist und die ein oder mehreren Exzentermechanismen 52 zum Zweck des Einstellens der Spaltbreite im Wesentlichen senkrecht auf die Längsachse des Längsstabes 56 wirken.

Der Längsstab 56 kann zum Beispiel zudem eine Drehachse bzw. Schwenkachse sein bzw. als solche fungieren, um einen Teil des Behälters 30 (zum Beispiel die der Trägerstruktur 70 abgewandte lange Seitenwand 32 und der obere Abschnitt 34b der der Trägerstruktur zugwandten langen Seitenwand 34) nach Freigabe der Schwenkachse 92 von der Trägerstruktur 70 weg zu schwenken. Dadurch kann zum Beispiel ein im Behälter 30 angeordnetes Sieb 64 (zum Beispiel Partikelmaterial-Sieb 64) für eine Wartung und/oder Reinigung desselben einfach zugänglich sein.

Die erste Einstellvorrichtung 50 ist dazu eingerichtet, um die beiden langen Seitenwände 32, 34 zumindest in einem jeweiligen an den Ausgabespalt 38 angrenzenden unteren Abschnitt 32a, 34a davon derart selektiv relativ zueinander zu bewegen, zum Beispiel zu schwenken, dass die Breite des Ausgabespalts 38 in Längsrichtung des Spalts variiert, zum Beispiel mit einer Differenz/Varianz von bis zu mindestens 1 mm, zum Beispiel bis zu mindestens 1,5 mm, zum Beispiel bis zu mindestens 2 mm.

Die erste Einstellvorrichtung 50 kann zum Beispiel eingerichtet sein, um die Breite des Ausgabespalts 38 um maximal 5 mm und mindestens 1 mm zu verstellen, zum Beispiel um maximal 4 mm und mindestens 2 mm zu verstellen. Der Beschichter 10 kann zum Beispiel als unidirektionaler Beschichter 10 ausgebildet sein.

Ein 3D-Drucker kann zum Beispiel den oben beschriebenen Beschichter 10 und einen Druckkopf zum selektiven Ausgeben eines Behandlungsmittels auf eine mittels des Beschichters 10 (zum Beispiel auf ein Baufeld) aufgebrachte Schicht aus losem Partikelmaterial aufweisen.

Der oben beschriebene Beschichter 10 kann zum Beispiel verwendet werden zum schichtweisen Auftragen von Partikelmaterial, welches zum Beispiel ausgewählt sein kann aus Sandpartikeln, zum Beispiel Gießereisand, und/oder Salzpartikeln, zum Beispiel für die Anwendung in der Gießtechnik, und/oder Metallpartikeln.

Der oben beschriebene 3D-Druckers kann zum Beispiel verwendet werden zur schichtweisen Herstellung einer Gießform und/oder eines Gießkerns, zum Beispiel mittels Binder-Jettings.

## Patentansprüche

1. Beschichter (10) für einen 3D-Drucker, aufweisend
einen langgestreckten Behälter (30), der zwei gegenüberliegende, lange Seitenwände (32, 34) aufweist, zwischen denen ein innerer Hohlraum (36) zur Aufnahme von Partikelmaterial gebildet ist, der in einem Ausgabespalt (38) zum Ausgeben des Partikelmaterials aus dem Behälter (30) auf ein Baufeld mündet,
eine erste Einstellvorrichtung (50), die dazu eingerichtet ist, um die beiden Seitenwände (32, 34) zumindest in einem jeweiligen an den Ausgabespalt (38) angrenzenden unteren Abschnitt (32a, 34a) davon relativ zueinander zu bewegen, um dadurch die Breite des Ausgabespalts (38) variabel einzustellen,
**dadurch gekennzeichnet, dass**
die erste Einstellvorrichtung (50) dazu eingerichtet ist, um die beiden langen Seitenwände (32, 34) zumindest in einem jeweiligen an den Ausgabespalt (38) angrenzenden unteren Abschnitt (32a, 34a) davon derart selektiv relativ zueinander zu bewegen, dass die Breite des Ausgabespalts (38) in Längsrichtung des Spalts variiert, zum Beispiel mit einer Differenz/Varianz von bis zu mindestens 1 mm, zum Beispiel bis zu mindestens 1,5 mm, zum Beispiel bis zu mindestens 2 mm.

2. Beschichter (10) für einen 3D-Drucker nach Anspruch 1, wobei
die erste Einstellvorrichtung (50) dazu eingerichtet ist, um die beiden langen Seitenwände (32, 34) zumindest in einem jeweiligen an den Ausgabespalt (38) angrenzenden unteren Abschnitt (32a, 34a) davon relativ zueinander zu schwenken, um dadurch die Breite des Ausgabespalts (38) variabel einzustellen.

3. Beschichter (10) nach Anspruch 1 oder 2, ferner aufweisend
eine langestreckte Trägerstruktur (70), an welcher der Behälter (30) und die erste Einstellvorrichtung (50) angebracht sind,
wobei die erste Einstellvorrichtung (50) eingerichtet ist, um diejenige Seitenwand (32), die der Trägerstruktur (70) des Beschichters (10) abgewandt ist, in zumindest dem an den Ausgabespalt (38) angrenzenden unteren Abschnitt (32a) davon zu bewegen, zum Beispiel zu schwenken.

4. Beschichter (10) nach Anspruch 3, wobei
die erste Einstellvorrichtung (50) eingerichtet ist, um die gesamte der Trägerstruktur (70) abgewandte lange Seitenwand (32) des Behälters (30) zu bewegen, zum Beispiel zu schwenken.

5. Beschichter (10) nach Anspruch 3 oder 4, wobei
die der Trägerstruktur (70) zugewandte lange Seitenwand (34) des Behälters (30) in zumindest einen oberen Abschnitt (34b) und einen unteren Abschnitt (34a) unterteilt ist, welche bewegungsentkoppelt sind,
wobei die erste Einstellvorrichtung (50) eingerichtet ist, um die gesamte der Trägerstruktur (70) abgewandte lange Seitenwand (32) des Behälters (30) gemeinsam mit dem oberen Abschnitt (34b) der der Trägerstruktur (70) zugewandten Seitenwand (34) des Behälters (30) zu bewegen, zum Beispiel zu schwenken,
wobei optional die der Trägerstruktur (70) abgewandte Seitenwand (32) des Behälters (30) mit dem oberen Abschnitt (34b) der der Trägerstruktur (70) zugewandten lange Seitenwand (34) des Behälters (30) in Querrichtung versteift ist, zum Beispiel in Längsrichtung des Behälters (30) an einer Position oder an mehreren Positionen hintereinander, zum Beispiel mittels eines jeweiligen Blechs (72), welches optional mit einem Durchgangsloch (74) versehen ist, um eine in dem Behälter (30) aufgenommene Partikelmaterial-Verteilerschnecke (76) hindurchzuführen.

6. Beschichter (10) nach einem der Ansprüche 3 bis 5, ferner aufweisend
ein langestrecktes Abstreifelement (78), welches an einem/dem unteren Abschnitt (34a) der der Trägerstruktur (70) zugewandten Seitenwand (34) des Behälters (30) angebracht ist und zum Beispiel die Form eines T-Profils hat,
wobei das Abstreifelement (78) optional als Schwingklinge (80) ausgebildet ist, die von einem an der Trägerstruktur (70) angebrachten Schwingantrieb (82) anregbar ist, zum Beispiel linear in Richtung parallel zum Baufeld, wobei der Schwingantrieb (82) zum Beispiel einen Exzentermechanismus (84) aufweist und/oder über 5 oder mehr Angriffspunkte (86) mit dem unteren Abschnitt (34a) der der Trägerstruktur (70) zugewandten lange Seitenwand (34) des Behälters (30) in Verbindung steht, und/oder
optional ferner aufweisend eine zweite Einstellvorrichtung (90), mit der ein Winkel des Abstreifelements (78) gegenüber einem Baufeld einstellbar ist, zum Beispiel in einem Bereich von kleiner gleich 3°, zum Beispiel kleiner gleich 2°, zum Beispiel kleiner gleich 1°, wobei zum Beispiel der Beschichter (10) ferner einen Lagerbock aufweist, der linear über ein Baufeld hinweg verfahrbar ist und an dem die Trägerstruktur (70) schwenkbar angebracht ist, und die zweite Einstellvorrichtung (90) eingerichtet ist, um die Trägerstruktur (70) gegenüber dem Lagerbock zu verschwenken, um hierdurch den Winkel des Abstreifelements (78) einzustellen, und/oder
ein langgestrecktes Vorsprungselement (66), welches an einem unteren Abschnitt (32a) der der Trägerstruktur (70) abgewandten langen Seitenwand (32) des Behälters (30) angebracht ist und einen in Längsrichtung des Ausgabespalts (38) verlaufenden, in Richtung zu der der Trägerstruktur (70) zugewandten langen Seitenwand (34) vorspringenden Vorsprung (68) hat, wobei ein unterer Abschnitt des langestreckten Vorsprungselements (66) eine erste Seite des Ausgabespalts (38) unmittelbar begrenzt/definiert und der Vorsprung (68) den Ausgabespalt (38) mit vertikalem Abstand in horizontaler Richtung überlappt, zum Beispiel unter Überlappung eines Schenkels des optionalen T-Profils, und/oder der Vorsprung (68) in Verlängerung des unteren Endes der der Trägerstruktur (70) abgewandten Seitenwand (32) angeordnet ist und ein Abschnitt (60) des langgestreckten Vorsprungselements (66) unterhalb des Vorsprungs (68), der eine erste Seite des Ausgabespalts (38) unmittelbar begrenzt/definiert, zurückgestuft ist,
wobei das langestreckten Vorsprungselement (66) optional wechselbar ausgebildet ist und/oder wobei optional eine Mehrzahl von langgestreckten Vorsprungselementen (66) vorgesehen sind, deren jeweiliger Vorsprung (68) und/oder zurückgestufter Abschnitt (60) unterschiedlich ausgebildet/dimensioniert ist.

7. Beschichter (10) nach Anspruch 5 oder 6,
wobei der obere Abschnitt (34b) und der untere Abschnitt (34a) der der Trägerstruktur (70) zugewandten langen Seitenwand (34) des Behälters (30) sich in Vertikalrichtung überlappen,
wobei optional der obere Abschnitt (34b) und der untere Abschnitt (34a) im Überlappungsbereich mit horizontalem Abstand/Spiel angeordnet sind und/oder der obere Abschnitt (34b) der der Trägerstruktur (70) zugewandten langen Seitenwand (34) des Behälters (30) im Überlappungsbereich der der Trägerstruktur (70) abgewandten langen Seitenwand (32) des Behälters (30) näher liegt.

8. Beschichter (10) nach einem der Ansprüche 5 bis 7,
wobei der obere Abschnitt (34b) der der Trägerstruktur (70) zugewandten langen Seitenwand (34) des Behälters (30) schwenkbar an die Trägerstruktur (70) angeschlossen ist,
wobei optional der schwenkbare Anschluss des oberen Abschnitts (34b) an der Trägerstruktur (70) lösbar / ent- und verriegelbar ausgebildet ist und/oder in Vertikalrichtung unterhalb einer Position angeordnet ist, an welcher der Behälter (30) mit der ersten Einstellvorrichtung (50) verbunden ist.

9. Beschichter (10) nach einem der vorangehenden Ansprüche, wobei
die erste Einstellvorrichtung (50) einen oder mehrere mit dem Behälter (30) in Verbindung stehende Exzentermechanismen (52) aufweist, zum Beispiel mehrere in Längsrichtung des Behälters (30) hintereinander angeordnete Exzentermechanismen (52), zum Beispiel mit einem jeweiligen Motor (54) separat angetriebene Exzentermechanismen (52).

10. Beschichter (10) nach Anspruch 9, wobei
die ein oder mehreren Exzentermechanismen (52) über einen parallel zur Längsrichtung des Behälters (30) angeordneten Längsstab (56) mit dem Behälter (30) in Verbindung stehen, wobei der Behälter (30) drehbar an dem Längsstab (56) angeschlossen ist und die ein oder mehreren Exzentermechanismen (52) im Wesentlichen senkrecht auf die Längsachse des Längsstabes (56) wirken.

11. Beschichter (10) für einen 3D-Drucker nach einem der vorangehenden Ansprüche,
wobei die erste Einstellvorrichtung (50) eingerichtet ist, um die Breite des Ausgabespalts (38) um maximal 5 mm und mindestens 1 mm zu verstellen, zum Beispiel um maximal 4 mm und mindestens 2 mm zu verstellen, und/oder
wobei der Beschichter (10) als unidirektionaler Beschichter (10) ausgebildet ist.

12. 3D-Drucker mit einem Beschichter (10) nach einem der Ansprüche 1-11, optional ferner aufweisend einen Druckkopf zum selektiven Ausgeben eines Behandlungsmittels auf eine mittels des Beschichters (10) aufgebrachte Schicht aus losem Partikelmaterial.

13. Verwendung des Beschichters (10) nach einem der Ansprüche 1-11 zum schichtweisen Auftragen von Partikelmaterial, ausgewählt aus Sandpartikeln, zum Beispiel Gießereisand, und/oder Salzpartikeln, zum Beispiel für die Anwendung in der Gießtechnik, und/oder Metallpartikeln.

14. Verwendung des 3D-Druckers nach Anspruch 12 zur schichtweisen Herstellung einer Gießform und/oder eines Gießkerns, zum Beispiel mittels Binder-Jettings.

## Claims

1. Coater (10) for a 3D printer, comprising:
an elongated container (30) having two opposing, long sidewalls (32, 34) between which an internal cavity (36) for receiving particulate material is formed, which opens into an output slot (38) for outputting the particulate material from the container (30) onto a construction field,
a first adjusting device (50) configured to move the two side walls (32, 34) relative to each other at least in a respective lower portion (32a, 34a) thereof adjoining the output slot (38) to thereby variably adjust the width of the output slot (38),
**characterized in that**
the first adjusting device (50) is configured to selectively move the two long side walls (32, 34) relative to each other at least in a respective lower portion (32a, 34a) thereof adjoining the output slot (38) such that the width of the output slot (38) varies in a longitudinal direction of the slot, for example with a difference/variance of up to at least 1 mm, for example up to at least 1.5 mm, for example up to at least 2 mm.

2. Coater (10) for a 3D printer according to claim 1, wherein
the first adjusting device (50) is configured to pivot the two long side walls (32, 34) relative to each other at least in a respective lower portion (32a, 34a) thereof adjoining the output slot (38), to thereby variably adjust the width of the output slot (38).

3. Coater (10) according to claim 1 or 2, further comprising
an elongated support structure (70) to which the container (30) and the first adjusting device (50) are attached,
wherein the first adjusting device (50) is configured to move, for example pivot, that side wall (32) which faces away from the support structure (70) of the coater (10) in at least the lower portion (32a) thereof adjoining the output slot (38).

4. Coater (10) according to claim 3, wherein
the first adjusting device (50) is configured to move, for example to pivot, the entire long side wall (32) of the container (30) facing away from the support structure (70) .

5. Coater (10) according to claim 3 or 4, wherein
the long side wall (34) of the container (30) facing the support structure (70) is subdivided into at least an upper portion (34b) and a lower portion (34a), which are motionally decoupled,
wherein the first adjusting device (50) is configured to move, for example to pivot the entire long side wall (32) of the container (30), facing away from the support structure (70), together with the upper portion (34b) of the side wall (34) of the container (30) facing the support structure (70),
wherein, optionally, the side wall (32) of the container (30) facing away from the support structure (70) is stiffened in the transverse direction with the upper portion (34b) of the long side wall (34) of the container (30) facing the support structure (70), for example in the longitudinal direction of the container (30) at one position or at several positions in succession, for example by means of a respective sheet (72) which is optionally provided with a through hole (74) for passing a particulate material distribution auger (76) accommodated in the container (30).

6. Coater (10) according to any one of claims 3 to 5, further comprising
an elongated wiping element (78) attached to a/the lower portion (34a) of the side wall (34) of the container (30) facing the support structure (70) and having for example the shape of a T-profile,
wherein the wiping element (78) is optionally formed as an oscillating blade (80) which is excitable by an oscillating drive (82) attached to the support structure (70), for example linearly in a direction parallel to the construction field, wherein the oscillating drive (82) for example comprises an eccentric mechanism (84) and/or is connected via 5 or more engagement points (86) to the lower portion (34a) of the long side wall (34) of the container (30) facing the support structure (70), and/or
optionally further comprising a second adjusting device (90) by which an angle of the wiping element (78) with respect to a construction field is adjustable, for example in a range of less than or equal to 3°, for example less than or equal to 2°, for example less than or equal to 1°, wherein, for example, the coater (10) further comprises a bearing block that is linearly movable across a construction field and to which the support structure (70) is pivotally attached, and the second adjusting device (90) is configured to pivot the support structure (70) relative to the bearing block to thereby adjust the angle of the wiping element (78), and/or
an elongated projection element (66) attached to a lower portion (32a) of the long side wall (32) of the container (30) facing away from the support structure (70) and having a projection (68) extending in the longitudinal direction of the output slot (38) and projecting toward the long side wall (34) facing the support structure (70), wherein a lower portion of the elongated projection element (66) directly delimits/defines a first side of the output slot (38) and the projection (68) overlaps the output slot (38) with a vertical distance in the horizontal direction, for example by overlapping a leg of the optional T-profile, and/or the projection (68) is arranged in extension of the lower end of the side wall (32) facing away from the support structure (70), and a portion (60) of the elongated projection element (66) below the projection (68) directly delimiting/defining a first side of the output slot (38) is stepped back,
wherein the elongated projection element (66) is optionally configured to be exchangeable and/or wherein, optionally, a plurality of elongated projection elements (66) are provided, the respective projection (68) and/or stepped-back portion (60) of which is differently formed/dimensioned.

7. Coater (10) according to claim 5 or 6,
wherein the upper portion (34b) and the lower portion (34a) of the long side wall (34) of the container (30) facing the support structure (70) overlap in a vertical direction,
wherein, optionally, the upper portion (34b) and the lower portion (34a) are arranged with horizontal distance/tolerance in the overlapping region and/or the upper portion (34b) of the long side wall (34) of the container (30) facing the support structure (70) is located closer to the long side wall (32) of the container (30) facing away from the support structure (70) in the overlapping region.

8. Coater (10) according to any one of claims 5 to 7,
wherein the upper portion (34b) of the long side wall (34) of the container (30) facing the support structure (70) is pivotally connected to the support structure (70),
wherein, optionally, the pivotable connection of the upper portion (34b) to the support structure (70) is formed to be releasable/unlockable and lockable and/or is arranged in a vertical direction below a position at which the container (30) is connected to the first adjusting device (50) .

9. Coater (10) according to any one of the preceding claims, wherein
the first adjusting device (50) comprises one or more eccentric mechanisms (52) connected to the container (30), for example a plurality of eccentric mechanisms (52) arranged in succession in the longitudinal direction of the container (30), for example eccentric mechanisms (52) driven separately by a respective motor (54).

10. Coater (10) according to claim 9, wherein
the one or more eccentric mechanisms (52) are connected with the container (30) via a longitudinal rod (56) arranged parallel to the longitudinal direction of the container (30), wherein the container (30) is rotatably connected to the longitudinal rod (56) and the one or more eccentric mechanisms (52) act substantially perpendicular to the longitudinal axis of the longitudinal rod (56).

11. Coater (10) for a 3D printer according to any one of the preceding claims,
wherein the first adjusting device (50) is arranged to adjust the width of the output slot (38) by a maximum of 5 mm and at least 1 mm, for example by a maximum of 4 mm and at least 2 mm, and/or
wherein the coater (10) is configured as a unidirectional coater (10).

12. 3D printer having a coater (10) according to any one of claims 1-11, optionally further comprising a print head for selectively outputting a treatment agent onto a layer of loose particulate material deposited by means of the coater (10) .

13. Use of the coater (10) according to any one of claims 1-11 for application in layers of particulate material selected from sand particles, for example foundry sand, and/or salt particles, for example for use in casting, and/or metal particles.

14. Use of the 3D printer according to claim 12 for production in layers of a casting mold and/or a foundry core, for example by means of binder jetting.

## Revendications

1. Dispositif de revêtement (10) pour une imprimante 3D, comprenant :
un récipient allongé (30) comprenant deux longues parois latérales opposées (32, 34) entre lesquelles est formée une cavité interne (36) destinée à recevoir du matériau particulaire, qui s'ouvre dans une fente de sortie (38) pour sortir le matériau particulaire du récipient (30) sur un champ de construction,
un premier dispositif de réglage (50) configuré pour déplacer les deux parois latérales (32, 34) l'une par rapport à l'autre au moins dans une partie inférieure respective (32a, 34a) de celles-ci contiguë à la fente de sortie (38) pour ainsi régler de manière variable la largeur de la fente de sortie (38),
**caractérisé en ce que**
le premier dispositif de réglage (50) est configuré pour déplacer sélectivement les deux parois latérales longues (32, 34) l'une par rapport à l'autre au moins dans une partie inférieure respective (32a, 34a) de celles-ci contiguë à la fente de sortie (38) de sorte que la largeur de la fente de sortie (38) varie dans une direction longitudinale de la fente, par exemple avec une différence/variance allant jusqu'à au moins 1 mm, par exemple jusqu'à au moins 1,5 mm, par exemple jusqu'à au moins 2 mm.

2. Dispositif de revêtement (10) pour une imprimante 3D selon la revendication 1, dans lequel
le premier dispositif de réglage (50) est configuré pour faire pivoter les deux parois latérales longues (32, 34) l'une par rapport à l'autre au moins dans une partie inférieure respective (32a, 34a) de celles-ci contiguë à la fente de sortie (38), pour ainsi régler de manière variable la largeur de la fente de sortie (38).

3. Dispositif de revêtement (10) selon la revendication 1 ou 2, comprenant en outre :
une structure de support allongée (70) à laquelle le récipient (30) et le premier dispositif de réglage (50) sont fixés,
dans lequel le premier dispositif de réglage (50) est configuré pour déplacer, par exemple pour faire pivoter, la paroi latérale (32) qui est tournée à l'opposé de la structure de support (70) du dispositif de revêtement (10) dans au moins sa partie inférieure (32a) contiguë à la fente de sortie (38).

4. Dispositif de revêtement (10) selon la revendication 3, dans lequel
le premier dispositif de réglage (50) est configuré pour déplacer, par exemple pour faire pivoter, la totalité de la paroi latérale longue (32) du récipient (30) tournée à l'opposé de la structure de support (70).

5. Dispositif de revêtement (10) selon la revendication 3 ou 4, dans lequel
la paroi latérale longue (34) du récipient (30) tournée vers la structure de support (70) est subdivisée en au moins une partie supérieure (34b) et une partie inférieure (34a), qui sont découplées en mouvement,
dans lequel le premier dispositif de réglage (50) est configuré pour déplacer, par exemple pour faire pivoter la totalité de la paroi latérale longue (32) du récipient (30), tournée à l'opposé de la structure de support (70), conjointement avec la partie supérieure (34b) de la paroi latérale (34) du récipient (30) tournée vers la structure de support (70),
dans lequel, en option, la paroi latérale (32) du récipient (30) tournée à l'opposé de la structure de support (70) est raidie dans la direction transversale avec la partie supérieure (34b) de la paroi latérale longue (34) du récipient (30) tournée vers la structure de support (70), par exemple dans une direction longitudinale du récipient (30) en une position ou en plusieurs positions successives, par exemple au moyen d'une feuille respective (72) qui est facultativement pourvue d'un trou traversant (74) pour faire passer une vis de distribution de matériau particulaire (76) logée dans le récipient (30).

6. Dispositif de revêtement (10) selon l'une quelconque des revendications 3 à 5, comprenant en outre :
un élément de raclage allongé (78) fixé à une/la partie inférieure (34a) de la paroi latérale (34) du récipient (30) tournée vers la structure de support (70) et ayant par exemple la forme d'un profilé en T,
dans lequel l'élément de raclage (78) est facultativement formé comme une lame oscillante (80) qui peut être excitée par un entraînement oscillant (82) fixé à la structure de support (70), par exemple linéairement dans une direction parallèle au champ de construction, dans lequel l'entraînement oscillant (82) comprend par exemple un mécanisme excentrique (84) et/ou est relié par 5 ou plusieurs points d'engagement (86) à la partie inférieure (34a) de la paroi latérale longue (34) du récipient (30) tournée vers la structure de support (70), et/ou
éventuellement comprenant en outre un second dispositif de réglage (90) par lequel un angle de l'élément de raclage (78) par rapport à un champ de construction est réglable, par exemple dans une plage inférieure ou égale à 3°, par exemple inférieure ou égale à 2°, par exemple inférieure ou égale à 1°, dans lequel, par exemple, le dispositif de revêtement (10) comprend en outre un bloc de support qui est peut être déplacé linéairement sur un champ de construction et auquel la structure de support (70) est fixée de manière pivotante, et le second dispositif de réglage (90) est configuré pour faire pivoter la structure de support (70) par rapport au bloc de support afin de régler ainsi l'angle de l'élément de raclage (78), et/ou
un élément allongé en saillie (66) fixé à une partie inférieure (32a) de la paroi latérale longue (32) du récipient (30) tournée à l'opposé de la structure de support (70) et ayant une saillie (68) s'étendant dans la direction longitudinale de la fente de sortie (38) et faisant saillie vers la paroi latérale longue (34) tournée vers la structure de support (70), dans lequel une partie inférieure de l'élément allongé an saillie (66) délimite/définit directement un premier côté de la fente de sortie (38) et la saillie (68) chevauche la fente de sortie (38) avec une distance verticale dans la direction horizontale, par exemple en chevauchant une branche du profilé en T optionnel, et/ou la saillie (68) est disposée dans le prolongement de l'extrémité inférieure de la paroi latérale (32) tournée à l'opposé de la structure de support (70), et une partie (60) de l'élément allongé en saillie (66) sous la saillie (68) délimitant/définissant directement un premier côté de la fente de sortie (38) est en retrait,
dans lequel l'élément allongé en saillie (66) est éventuellement configuré pour être interchangeable et/ou dans lequel, éventuellement, une pluralité d'éléments allongés en saillie (66) sont prévus, dont la saillie (68) et/ou la partie en retrait (60) respective est formée/dimensionnée différemment.

7. Dispositif de revêtement (10) selon la revendication 5 ou 6,
dans lequel la partie supérieure (34b) et la partie inférieure (34a) de la paroi latérale longue (34) du récipient (30) faisant face à la structure de support (70) se chevauchent dans une direction verticale,
dans lequel, facultativement, la partie supérieure (34b) et la partie inférieure (34a) sont disposées avec une distance/tolérance horizontale dans la région de chevauchement et/ou la partie supérieure (34b) de la paroi latérale longue (34) du récipient (30) faisant face à la structure de support (70) est située plus près de la paroi latérale longue (32) du récipient (30) tournée à l'opposé de la structure de support (70) dans la région de chevauchement.

8. Dispositif de revêtement (10) selon l'une quelconque des revendications 5 à 7,
dans lequel la partie supérieure (34b) de la paroi latérale longue (34) du récipient (30) tournée vers la structure de support (70) est reliée de manière pivotante à la structure de support (70),
dans lequel, facultativement, la connexion pivotante de la partie supérieure (34b) à la structure de support (70) est formée pour être amovible / déverrouillable et verrouillable et/ou est disposée dans une direction verticale en dessous d'une position à laquelle le récipient (30) est connecté au premier dispositif de réglage (50).

9. Dispositif de revêtement (10) selon l'une quelconque des revendications précédentes, dans lequel
le premier dispositif de réglage (50) comprend un ou plusieurs mécanismes excentriques (52) reliés au récipient (30), par exemple une pluralité de mécanismes excentriques (52) disposés en succession dans la direction longitudinale du récipient (30), par exemple des mécanismes excentriques (52) entraînés séparément par un moteur respectif (54).

10. Dispositif de revêtement (10) selon la revendication 9, dans lequel
ledit un ou lesdits plusieurs mécanismes excentriques (52) sont reliés au récipient (30) par l'intermédiaire d'une tige longitudinale (56) disposée parallèlement à la direction longitudinale du récipient (30), le récipient (30) étant relié de manière rotative à la tige longitudinale (56) et ledit un ou lesdits plusieurs mécanismes excentriques (52) agissant sensiblement perpendiculairement à l'axe longitudinal de la tige longitudinale (56).

11. Dispositif de revêtement (10) pour une imprimante 3D selon l'une quelconque des revendications précédentes,
dans lequel le premier dispositif de réglage (50) est agencé pour régler la largeur de la fente de sortie (38) d'au maximum 5 mm et au moins 1 mm, par exemple d'au maximum 4 mm et au moins 2 mm, et/ou
dans lequel le dispositif de revêtement (10) est configurée comme un dispositif de revêtement unidirectionnel (10) .

12. Imprimante 3D présentant un dispositif de revêtement (10) selon l'une quelconque des revendications 1 à 11, comprenant éventuellement en outre une tête d'impression pour délivrer sélectivement un agent de traitement sur une couche de matériau particulaire en vrac déposée au moyen du dispositif de revêtement (10).

13. Utilisation du dispositif de revêtement (10) selon l'une quelconque des revendications 1-11 pour l'application par couches de matériau particulaire choisi parmi des particules de sable, par exemple du sable de fonderie, et/ou des particules de sel, par exemple pour l'utilisation en fonderie, et/ou des particules métalliques.

14. Utilisation de l'imprimante 3D selon la revendication 12 pour la production en couches d'un moule de coulée et/ou d'un noyau de fonderie, par exemple au moyen d'un jet de liant.
